# NEUE EUROPÄISCHE PATENTSCHRIFT

(11) **EP 2 789 512 B2**
(45) Veröffentlichungstag und Bekanntmachung des Hinweises auf die Entscheidung über den Einspruch: **25.08.2021**
(45) Hinweis auf die Patenterteilung: 19.08.2015
(21) Anmeldenummer: 13163513.8
(22) Anmeldetag: 12.04.2013
(51) Int. Cl.: B60T 17/00, B01D 53/26, B60T 17/02

(54) **Druckluftaufbereitungseinrichtung für ein Nutzfahrzeug**
Compressed air supply device for a commercial vehicle
Dispositif de préparation d'air comprimé pour un véhicule utilitaire

(43) Veröffentlichungstag der Anmeldung: 15.10.2014
(73) Patentinhaber: Haldex Brake Products GmbH, 69123 Heidelberg (DE)
(72) Erfinder: Heer, Siegfried, 69168 Wiesloch (DE)
(74) Vertreter: REHBERG HÜPPE + PARTNER

(56) Entgegenhaltungen:
- EP-A1- 2 407 231
- EP-A1- 2 570 316
- EP-A2- 2 570 318
- EP-B1- 2 139 735
- EP-B1- 2 219 566
- DE-A1-102007 013 671
- DE-A1-102010 018 949
- DE-B3-102006 034 762
- DE-B3-102008 031 318

## Beschreibung

### TECHNISCHES GEBIET DER ERFINDUNG

Die Erfindung betrifft eine Druckluftaufbereitungseinrichtung für ein Nutzfahrzeug. Gattungsgemäße Druckluftaufbereitungseinrichtungen dienen insbesondere
- der Verarbeitung von Druckluft aus einer Druckluftquelle, insbesondere mit einer Lufttrocknung und Luftreinigung und -filterung,
- einer Versorgung von Verbraucherkreisen des Nutzfahrzeugs wie Betriebsbremskreise I, II, einem Luftfederkreis, einem Anhängerbremskreis, Nebenverbraucherkreisen u. ä.,
- einer Druckregelung des Drucks in den Verbraucherkreisen,
- der Steuerung oder Regelung (im Folgenden "Steuerung") einer Regeneration,
- der Steuerung einer Befüllreihenfolge der Verbraucherkreise,
- einer Kreisabsicherung,
- der Ermöglichung einer Querspeisung eines Verbraucherkreises aus einem anderen Verbraucherkreis,
- der Detektion von Drucklufteinbrüchen,
- der bedarfsgerechten Kompressorsteuerung u. ä.

### STAND DER TECHNIK

DE 196 20 851 C2 offenbart eine Druckluftanlage für ein Nutzfahrzeug, bei der Verbraucherkreise wie beispielsweise Bremskreise und ein Anhängerbremskreis über einen Kompressor mit Druckluft versorgt werden. Zwischen Verbraucherkreise und Kompressor sind in einer Druckluftaufbereitungseinrichtung in pneumatischer Reihenschaltung ein Druckregler, ein Lufttrockner, ein in Richtung der Verbraucherkreise öffnendes Rückschlagventil mit hierzu parallel angeordnetem Steuer- und Bypassventil und eine Zentralleitung zwischengeschaltet. Das elektrisch von einer Steuereinheit angesteuerte Steuer- und Bypassventil ist als 2/2-Wege-Magnetventil ausgebildet und multifunktional eingesetzt, indem dieses einerseits für eine Regeneration des Lufttrockners eine das Rückschlagventil überbrückende Bypassleitung öffnet, sodass Druckluft aus den Verbraucherkreisen (umgekehrt zur Strömungsrichtung während der Befüllung derselben) zu dem Lufttrockner gelangen kann. Andererseits steuert das Steuer- und Bypassventil pneumatisch ein Entlüftungsventil in Ausbildung als 2/2-Wegeventil an, welches in einer Zweigleitung angeordnet ist, die zwischen dem Druckregler und dem Lufttrockner abzweigt. In der Öffnungsstellung des Steuer- und Bypassventils erfolgt die Regeneration des Lufttrockners, indem die Druckluft von den Verbraucherkreisen über die Bypassleitung den Lufttrockner durchströmt und über das Entlüftungsventil in die Umgebung abgeleitet wird. Der Druckregler ist als pneumatisch angesteuertes 3/2-Wegeventil ausgebildet, welches bei nicht druckbeaufschlagtem pneumatischen Steueranschluss eine Durchlassstellung einnimmt, in welcher Druckluft von dem Kompressor zu dem Lufttrockner und den weiteren stromabwärts angeordneten Bauelementen und Verbraucherkreisen gelangen kann (sogenannte "Lastphase"). Hingegen nimmt der Druckregler für drucklosen pneumatischen Steueranschluss eine Entlüftungsstellung ein, in der der Kompressor in die Umgebung fördert (sogenannte "Leerlaufphase"), was vorzugsweise der Fall ist, wenn in der Zentralleitung und/oder in mindestens einem Verbraucherkreis ein Drucksensor erfasst, dass ein Betriebsdruck erreicht ist. Der pneumatische Steueranschluss des Druckreglers ist verbunden mit dem Ausgang eines Wechselventils, dessen erster Eingang mit der Bypassleitung bzw. der pneumatischen Steuerleitung des Entlüftungsventils verbunden ist. Dies hat zur Folge, dass bei Ansteuerung des Steuer- und Bypassventils in die Durchlassstellung, also Öffnung der Bypassleitung und Öffnung des Entlüftungsventils, auch der Steueranschluss des Druckreglers druckbeaufschlagt wird. Somit fördert der Kompressor während der Regeneration keine weitere Druckluft zu dem Lufttrockner. Das Steuer- und Bypassventil erfüllt daher neben den beiden genannten Funktionen die dritte Funktion der Beeinflussung der Schaltstellung des Druckreglers. Der andere Eingang des Wechselventils ist pneumatisch verbunden mit einem 3/2-Wege-Magnetventil, welches von der Steuereinheit zur Ansteuerung des Druckreglers auch unabhängig von der Steuerung der Regeneration über das Steuer- und Bypassventil angesteuert werden kann. Für die in DE 196 20 851 C2 dargestellte Druckluftanlage verzweigen die beiden Bremskreise nach einem Druckbegrenzungsventil über ein T-Stück von der Zentralleitung mit in den Zweigleitungen angeordneten Druckbegrenzungsventilen mit parallel geschalteter Drossel und Rückschlagventil, während weitere Verbraucherkreise stromabwärts der Druckbegrenzungsventile für die Betriebsbremskreise mit weiteren Rückschlagventilen und Druckbegrenzungsventilen abzweigen. DE 196 20 851 C2 hat die bedarfsabhängige Steuerung der Zeitdauern für eine Lastphase des Kompressors und die Regenerationsphase zum Gegenstand.

DE 10 2010 018 949 A1 beschreibt eine Druckluftaufbereitungseinrichtung, wo die beiden Magnetschaltventile in Serie gekoppelt sind.

Während gemäß DE 196 20 851 C2 der Kompressor ständig fördert, aber über den Druckregler zwischen Lastphasen und Leerlaufphasen hin- und hergeschaltet werden kann, beschreibt EP 0 976 635 B2 eine bedarfsabhängige elektrische oder elektropneumatische (mit oder ohne Vorsteuerung) Steuerung des Förderbetriebs des Kompressors über einen pneumatischen oder elektrischen Steueranschluss des Kompressors. Ein Druckregler ist hier elektrisch über eine Steuereinheit angesteuert. Überschreitet der in der Zentralleitung gemessene Druck einen Schwellwert, wird unmittelbar elektrisch oder mit elektropneumatischer Vorsteuerung der Kompressor deaktiviert. Fällt infolge eines Druckluftverbrauchs der Druck in der Zentralleitung unter einen unteren Schwellwert, steuert die Steuereinheit direkt oder elektropneumatisch den Kompressor zur Wiederaufnahme des Förderbetriebs an. EP 0 976 635 B2 offenbart auch ein Ausführungsbeispiel, in welchem ein elektrisches Steuersignal der Steuereinheit sowohl für die elektrische Steuerung des Kompressors als auch für die Steuerung des Druckreglers verwendet wird. Gemäß EP 0 976 635 B2 sind die zwischen der Zentralleitung und den Verbraucherkreisen angeordneten Ventilelemente als Kreisschutzventile bezeichnet und in einem Mehrkreisschutzventil zusammengefasst.

EP 1 318 936 B1 beschreibt als Stand der Technik eine Ausführungsform, bei welcher ein multifunktionales, elektrisch von einer Steuereinheit angesteuertes Steuerventil sowohl zur Ansteuerung des Kompressors als auch des Entlüftungsventils dient. Die Steuerung des Kompressors besteht hierbei in der Betätigung eines Zylinderkopfventils des Kompressors. Zusätzlich ist ein ebenfalls elektrisch von der Steuereinheit angesteuertes Bypassventil vorhanden. Für die Ermöglichung eines Regenerationsbetriebs ist es hier erforderlich, dass sowohl das Steuerventil als auch das Bypassventil in ihre Durchlassstellung betätigt werden, was zur Folge hat, dass Druckluft aus den Verbraucherkreisen über das Bypassventil, den Lufttrockner und das Entlüftungsventil in die Atmosphäre gelangen kann, während gleichzeitig der Kompressor zur Öffnung des Zylinderkopfventils angesteuert wird. EP 1 318 936 B1 schlägt eine abgewandelte Ausführungsform vor, bei welcher ein elektrisch angesteuertes multifunktionales Steuerventil pneumatisch sowohl das Entlüftungsventil als auch das Bypassventil ansteuert. Zur Ansteuerung des Kompressors ist in diesem Fall ein weiteres elektrisch angesteuertes Steuerventil vorgesehen. Für eine weitere Abwandlung ist dieses weitere Steuerventil neben der pneumatischen Ansteuerung des Entlüftungsventils nicht zur Ansteuerung des Bypassventils eingesetzt. Vielmehr bildet dieses unmittelbar das Bypassventil, sodass der pneumatische Steuerdruck für das Entlüftungsventil dem Druck in der Bypassleitung entspricht. In weiterer Abwandlung ist das für die Ansteuerung des Kompressors zuständige Steuerventil zusätzlich für die Ansteuerung eines Druckreglers eingesetzt, welcher hier aus der Kombination eines Sperrventils mit einem Entlüftungsventil besteht. Gleichzeitig mit der Abschaltung des Kompressors wird das Sperrventil des Druckreglers in die Sperrstellung überführt, sodass der Druck in einer zu dem Lufttrockner führenden Versorgungsleitung eingesperrt ist. Gleichzeitig wird auch das Entlüftungsventil des Druckreglers in seine Entlüftungsstellung gesteuert, was zur Folge hat, dass der Leitungsstrang zwischen Sperrventil und Kompressor entlüftet werden kann. Mit Wiederaufnahme des Förderbetriebs des Kompressors ist auf diese Weise ein schnellerer Druckaufbau gewährleistet, da zuvor nicht eine Entlüftung der Versorgungsleitung bis zu dem Lufttrockner erfolgt ist mit Abschaltung des Kompressors, sondern vielmehr lediglich eine Entlüftung bis zu dem Sperrventil erfolgt ist, womit letztendlich bei Wiederaufnahme des Förderbetriebs des Kompressors eine größere Menge an Druckluft in der Druckluftanlage vorhanden ist.

EP 1 386 811 B1 offenbart eine Ausführungsform, welche im Wesentlichen einer erläuterten Ausführungsform gemäß EP 0 976 635 B2 entspricht. Hier ist aber der pneumatische Steuerdruck zur Steuerung des Förderbetriebs des Kompressors über ein Schnellentlüftungsventil erzeugt. Das Schnellentlüftungsventil wird pneumatisch von einem Magnetventil angesteuert wird, welches multifunktional auch zur Steuerung oder Regelung des Druckreglers eingesetzt ist, indem dieses auch ein Entlüftungsventil ansteuert.

Gemäß DE 103 57 762 A1 erfolgt die pneumatische Steuerung des Kompressors über ein 3/2-Wege-Magnetventil, welches aus der Zentralleitung mit Druckluft versorgt wird. Ein multifunktionales Steuer- und Bypassventil, welches als 3/2-Wege-Magnetventil ausgebildet ist, von der Zentralleitung mit Druckluft versorgt wird und von der Steuereinheit angesteuert ist, öffnet einerseits die Bypassleitung für eine Regeneration des Lufttrockners und steuert andererseits ein Entlüftungsventil an, welches von der Eingangsleitung zwischen Kompressor und Lufttrockner abzweigt. Dieses Entlüftungsventil kann gleichzeitig als Druckregler und für die Entlüftung im Regenerationsbetrieb genutzt werden. Zusätzlich zweigt von der Eingangsleitung zwischen Kompressor und Lufttrockner ein Überdruckventil ab. Entsprechendes gilt für DE 103 57 763 A1, DE 103 57 764 A1, DE 103 57 765 A1 und DE 103 57 766 A1.

EP 2 139 735 B1 offenbart das parallele Abzweigen von Betriebsbremskreisen und eines Luftfederkreises von einer Zentralleitung, während weitere Verbraucherkreise seriell von den Betriebsbremskreisen, also stromabwärts der Kreisschutzventile für die Betriebsbremskreise abzweigen. Hier wird ein Bypass- und Steuerventil nicht aus der Zentralleitung mit Druckluft versorgt, sondern von einem seriellen Verbraucherkreis, also stromabwärts der Kreisschutzventile der Betriebsbremskreise. Das Bypass- und Steuerventil ist als 3/2-Wege-Magnetventil ausgebildet und besitzt zusätzlich dem Anschluss für den seriellen Verbraucherkreis einen Entlüftungsanschluss. Neben der Druckbeaufschlagung der Bypassleitung aus dem seriellen Verbraucherkreis zur Umgehung des Rückschlagventils und zur Ermöglichung der Regeneration steuert das Steuer- und Bypassventil die den Betriebsbremskreisen vorgeordneten Kreisschutzventile pneumatisch an. Nach dem Lufttrockner wird die Druckluft zur Regeneration über ein Entlüftungsventil in die Umgebung geleitet. Ein weiteres 3/2-Wege-Magnetventil wird ebenfalls von dem seriellen Verbraucherkreis mit Druckluft versorgt und steht mit der Entlüftung in Verbindung. Ein Steueranschluss dieses 3/2-Wege-Magnetventils dient sowohl zur Ansteuerung des Kompressors als auch des Entlüftungsventils. Die Steuerung des Kompressors erfolgt hierbei durch Umschalten von einem Leerlaufzustand in einen Lastzustand oder über die Steuerung einer Kupplung zwischen Verbrennungsmotor und Kompressor. In EP 2 139 735 B1 ist auch eine rein elektrische Ansteuerung des Kompressors angesprochen ist. Das genannte Entlüftungsventil kann zusätzlich auch als Überdruckventil ausgebildet sein, wenn dieses einen weiteren Steueranschluss aufweist, der mit der eingangsseitigen Versorgungsleitung verbunden ist. In einer abgewandelten Ausführungsform gemäß EP 2 139 735 B1 ist in der Eingangsleitung ein zusätzliches 2/2-Wegeventil angeordnet, welches von dem 3/2-Wege-Magnetventil pneumatisch angesteuert wird, welches auch für die Ansteuerung des Kompressors und des Entlüftungsventils genutzt wird. Durch Einsatz des 2/2-Wege-Sperrventils (welches in dieser Druckschrift auch als Förderleitungs-Absperrventil bezeichnet ist) kann der Druckluftverlust während des Regenerationsbetriebs verringert werden, indem während der Regeneration Druckluft zwischen dem Kompressor und dem 2/2-Wege-Sperrventil eingesperrt wird.

DE 10 2006 034 762 B3 offenbart eine grundsätzlich EP 2 139 735 B1 entsprechende Ausführungsform, bei welcher allerdings das Entlüftungsventil auf einer Seite von einem Regenerations-Magnetventil angesteuert wird und auf einer gegenüberliegenden Seite von einem Druckregler-Magnetventil angesteuert wird.

Auch gemäß DE 10 2008 031 318 B3 findet ein von der Zentralleitung gespeistes Bypass- und Steuerventil Einsatz, welches als 3/2-Wege-Magnetventil ausgebildet ist und zur pneumatischen Ansteuerung sowohl des Kompressors als auch des Förderleitungs-Absperrventils genutzt ist. Ein weiteres 3/2-Wege-Magnetventil dient zur pneumatischen Ansteuerung eines für die Regeneration genutzten Entlüftungsventils. In abgewandelten Ausführungsformen ist das Steuer- und Bypassventil nicht unmittelbar in die Bypassleitung integriert. Vielmehr steuert dies ein zusätzliches, in die Bypassleitung integriertes Ventil an.

### AUFGABE DER ERFINDUNG

Der Erfindung liegt die Aufgabe zugrunde, eine Druckluftaufbereitungseinrichtung für ein Nutzfahrzeug hinsichtlich der Steuerungsmöglichkeiten des Kompressors, eines Entlüftungsventils, eines Druckreglers und/oder von Kreisschutzventilen zu verbessern, wobei insbesondere
- dem Bauaufwand,
- unterschiedlichen Steuerungsmöglichkeiten in unterschiedlichen Betriebssituationen,
- einem Druckluftverbrauch im Regenerationsbetrieb und
- einem Absperren von Kreisschutzventilen von Betriebsbremskreisen für ein Auffüllen mindestens eines weiteren Verbraucherkreises auf ein höheres Druckniveau

Rechnung getragen werden soll.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Druckluftaufbereitungseinrichtung verfügt über ein elektrisch angesteuertes Ventil. Dieses ist multifunktional ausgebildet: Das elektrisch angesteuerte Ventil steuert (direkt oder indirekt) sowohl einen Kompressor an als auch ein für eine Regeneration und/oder Druckregelung genutztes Entlüftungsventil an. Dieses Entlüftungsventil wird an anderer Stelle auch als "Entlastungsventil" bezeichnet. Durchaus möglich ist, dass das Ventil neben den genannten Funktionen auch weitere Funktionen erfüllt. Beispielsweise kann das Ventil auch für eine Ansteuerung eines Bypassventils und/oder eines Mehrkreisschutzventils verantwortlich sein.

Für die erfindungsgemäße Ausgestaltung ist der Schaltzustand des Entlüftungsventils nicht ausschließlich von dem genannten elektrisch angesteuerten Ventil abhängig. Vielmehr wird das Entlüftungsventil (direkt oder indirekt) sowohl von dem elektrisch angesteuerten Ventil, welches den Kompressor ansteuert, als auch von einem weiteren elektrisch angesteuerten Ventil angesteuert. Wäre abweichend zur Erfindung der Schaltzustand des Entlüftungsventils nur von dem Ventil, welches auch den Kompressor ansteuert, abhängig, wäre die Umschaltung des Entlüftungsventils nur gleichzeitig mit der Schaltung des Kompressors möglich. Somit kann erfindungsgemäß die Zahl der Steuerungsmöglichkeiten und unterschiedlichen Betriebszustände für Entlüftungsventil einerseits und Kompressor andererseits erhöht werden. Anders gesagt ist die Schaltstellung des Entlüftungsventils nicht ein-eindeutig mit der Schaltstellung des Kompressors korreliert. Dennoch liegt an dem Entlüftungsventil das Steuersignal des Kompressors vor, so dass die Schaltstellung des Entlüftungsventils auch hiervon abhängig gemacht werden kann.

Für eine erste erfindungsgemäße Lösung der der Erfindung zugrundeliegenden Aufgabe besitzt das Entlüftungsventil zwei Steueranschlüsse, die auf gleichen Seiten des Entlüftungsventils angeordnet sind. Hierbei ist ein Steueranschluss mit dem elektrisch angesteuerten Ventil, welches den Kompressor ansteuert, (direkt oder indirekt) verbunden, während der andere Steueranschluss mit dem weiteren elektrisch angesteuerten Ventil (direkt oder indirekt) verbunden ist. Dies stellt eine besonders einfache Ausgestaltung der erfindungsgemäßen Ansteuerung des Entlüftungsventils dar.

Für eine zweite erfindungsgemäße Lösung der der Erfindung zugrundeliegenden Aufgabe ist die Ansteuerbarkeit des Entlüftungsventils über zwei Steuerdrücke nicht durch direkte Ansteuerung des Entlüftungsventils mit den Steuerdrücken realisiert, sondern durch eine indirekte Ansteuerung des Entlüftungsventils, indem die Ansteuerung des Entlüftungsventils über ein pneumatisches Und-Glied erfolgt. Ein Eingang dieses Und-Glieds ist mit dem Ventil verbunden, welches auch den Kompressor ansteuert. Der Ausgang des Und-Glieds steuert das Entlüftungsventil an, sodass unter Umständen das Entlüftungsventil lediglich einen pneumatischen Steueranschluss aufweist. Die Realisierung unter Einsatz eines Und-Glieds stellt eine besonders kostengünstige Lösung dar, da ein pneumatisches Und-Glied mit geringen Kosten bereitgestellt werden kann. Des Weiteren hat sich der Betrieb eines Und-Glieds als sehr betriebssicher herausgestellt. Der andere Eingang des pneumatischen Und-Glieds ist erfindungsgemäß mit dem weiteren elektrisch angesteuerten Ventil verbunden. Letztendlich kann durch diese Ausgestaltung gewährleistet werden, dass der Druck an dem Ausgang des Und-Glieds sowohl von dem elektrisch angesteuerten Ventil, welches den Kompressor ansteuert, als auch von dem weiteren elektrisch angesteuerten Ventil abhängig ist.

Das weitere Ventil kann ausschließlich für die direkte oder indirekte Ansteuerung des Entlüftungsventils, also insbesondere des anderen Eingangs des Und-Glieds verantwortlich sein. Denkbar ist aber auch, dass das weitere elektrische Ventil für vielfältige weitere Funktionen verantwortlich ist. Für eine besondere Ausgestaltung der Erfindung ist das weitere Ventil auch für eine Ansteuerung eines Kreisschutzventils verantwortlich. Diese Ausgestaltung führt zu einer Kostenersparnis, da unter Umständen zusätzliche elektrisch angesteuerte Ventile für die Ansteuerung des Kreisschutzventils eingespart werden. Des Weiteren kann hierdurch Bauraum eingespart werden. Auch macht sich diese Ausgestaltung der Erfindung unter Umständen zu Nutze, dass bei gleichzeitiger Ansteuerung des Und-Glieds (und damit des Entlüftungsventils) und des Kreisschutzventils, beispielsweise für eine Überführung desselben in eine Durchlassstellung, mit dem weiteren Ventil auf besonders einfache Weise ein Regenerationsbetrieb eingeleitet wird. Für diesen Regenerationsbetrieb kann Druckluft aus einem Verbraucherkreis über das geöffnete Mehrkreisschutzventil den Lufttrockner durchströmen und über das Entlüftungsventil in die Umgebung abgeführt werden.

Es ist durchaus möglich, dass eine für die Regeneration genutzte Leitung, insbesondere eine ein Rückschlagventil der Zentralleitung umgehende Bypassleitung, in welche auch ein Drosselventil integriert sein kann, ständig offen ist. Dies hat aber zur Folge, dass die Bypassleitung auch Druckluftströme und einen Ausgleich einer Druckdifferenz ermöglicht, wenn dies an sich nicht gewünscht ist. In besonderer Ausgestaltung der Erfindung steuert das weitere Ventil auch ein Bypassventil in der Bypassleitung an, um derartige unerwünschte Druckluftströme zu unterbinden. Demgemäß kann durch ein einziges elektrisch angesteuertes Ventil gleichzeitig die Umschaltung des Mehrkreisschutzventils, des Bypassventils und des Entlüftungsventils zur Unterbrechung oder Aufnahme eines Regenerationsbetriebs gesteuert werden.

Möglich ist, dass das weitere Ventil direkt oder indirekt das Bypassventil ansteuert. Für den Fall des Einsatzes eines pneumatischen Und-Glieds kann der Ausgang des Und-Glieds auch das Bypassventil ansteuern, womit die zuvor erläuterte Wirkungsweise erzielt werden kann.

Für die konstruktive Ausgestaltung des im Rahmen der Erfindung eingesetzten pneumatischen Und-Glieds gibt es unterschiedliche Möglichkeiten:

Für eine erste Ausgestaltungsform der Erfindung besitzt das pneumatische Und-Glied ein integriertes Ventil, welches dem ersten Eingang zugeordnet ist und einen ersten Ventilsitz aufweist. Ein ebenfalls in das Und-Glied konstruktiv integriertes zweites Ventil ist dem zweiten Eingang zugeordnet und mit einem zweiten Ventilsitz gebildet. Ein gemeinsames Ventilelement ist von den Drücken an beiden Eingängen beaufschlagt, womit dieses Ventilelement je nach Druck an den Eingängen ein Ventil öffnet, das andere Ventil öffnet oder beide Ventile öffnet. Ausschließlich dann, wenn beide Eingänge druckbeaufschlagt sind, nimmt das Ventilelement eine Durchlassstellung ein, in welcher das Ventilelement mit beiden Ventilsitzen jeweils einen Übertrittsquerschnitt bildet. Somit sind in dieser Durchlassstellung beide Ventile geöffnet. Der Übertrittsquerschnitt verbindet die beiden Eingänge mit dem Ausgang, was bedeutet, dass der Ausgang von beiden Eingängen druckbeaufschlagt ist. Sind hingegen nicht beide Eingänge druckbeaufschlagt, also ist nur ein Eingang druckbeaufschlagt oder kein Eingang druckbeaufschlagt, wird der Ausgang des Und-Glieds über mindestens einen Eingang entlüftet, indem das diesem Eingang zugeordnete Ventil einen Übertrittsquerschnitt ausbildet, während u. U. das andere Ventil geschlossen ist. Eine derartige konstruktive Ausgestaltung stellt eine einfache, kostengünstige, aber dennoch betriebssichere Ausgestaltung eines Und-Glieds dar.

Für eine andere konstruktive Ausgestaltung ist das pneumatische Und-Glied mit einem Schaltventil gebildet. Bei diesem Schaltventil ist ein Eingang ein steuernder Eingang, über welchen also das Schaltventil umschaltbar ist. Der andere Eingang ist ein versorgender Eingang. Sind beide genannten Eingänge druckbeaufschlagt, nimmt infolge des Druckes an dem steuernden Eingang das Schaltventil eine Durchlassstellung ein, in welcher ein Ausgang, welcher das Entlüftungsventil ansteuert, mit dem versorgenden Eingang verbunden und damit druckbeaufschlagt wird.

Für die Ausgestaltung eines derartigen Schaltventils gibt es vielfältige Möglichkeiten, insbesondere mit einer beliebigen Bauweise und/oder einer beliebigen Zahl von Stellungen und/oder Anschlüssen.

Gemäß einer Ausgestaltungsform der Erfindung ist das Schaltventil ein pneumatisch gesteuertes 2/2-Wegeventil, welches bei Druck an dem steuernden Eingang eine Durchlassstellung einnimmt, in welcher der versorgende Eingang mit dem Ausgang verbunden ist.

Für eine alternative Ausgestaltung ist das Schaltventil ein pneumatisch gesteuertes 3/2-Wegeventil, welches mit Druckbeaufschlagung des steuernden Eingangs in eine Durchlassstellung geschaltet wird, in welcher der versorgende Eingang mit dem Ausgang verbunden wird.

In weiterer Ausgestaltung der Erfindung wird vorgeschlagen, dass der Ausgang des Und-Glieds ein Ventil ansteuert, bei dem es sich um ein 3/2-Wegeventil handeln kann und welches (neben anderen Funktionen) das Entlüftungsventil bildet. Das 3/2-Wegeventil verbindet in einer ersten Schaltstellung den Kompressor mit dem Lufttrockner, während dieses in einer zweiten Schaltstellung die Verbindung zwischen Kompressor und Lufttrockner sperrt, aber eine Verbindung des Lufttrockners mit einem Entlüftungsanschluss bereitstellt. Diese Ausgestaltungsform hat den Vorteil, dass mit der Überführung des Entlüftungsventils in die Entlüftungsstellung eine Teilleitung zwischen Kompressor und dem Lufttrockner abgesperrt wird, nämlich der Teil der Leitung vor dem Entlüftungsventil. Mit einsetzendem Regenerationsbetrieb wird somit diese Teilleitung nicht entlüftet, sondern lediglich die andere Teilleitung zwischen Ventil und Lufttrockner. Nach Beendigung des Regenerationsbetriebs ist somit nicht ein Wiederauffüllen der erstgenannten Teilleitung erforderlich, womit eine Lastphase verkürzt werden kann und ein Wirkungsgrad erhöht werden kann. Hingegen ist in der ersten Schaltstellung die Verbindung zwischen Kompressor und Lufttrockner geschaffen, so dass diese Schaltstellung für die Lastphase eingenommen werden kann.

Für eine weitere erfindungsgemäße Ausgestaltungsform steuert der Ausgang des Und-Glieds sowohl ein zwischen Kompressor und Lufttrockner angeordnetes 2/2-Wegeventil als auch das Entlüftungsventil an. Das 2/2-Wegeventil ist somit für das Absperren des Leitungszweigs verantwortlich, wie dies zuvor für das 3/2-Wegeventil erläutert worden ist.

Für die Ausbildung der elektrisch angesteuerten Ventile für die Beaufschlagung der Eingänge des Und-Glieds gibt es vielfältige Möglichkeiten mit beliebiger Zahl von Stellungen und Wegen der eingesetzten Magnetventile. In besonderer Ausgestaltung der Erfindung werden die Eingänge des Und-Glieds von zwei von einer Steuereinheit angesteuerten 3/2-Wege-Magnetventilen angesteuert, die vorzugsweise jeweils eine Belüftungsstellung und eine Entlüftungsstellung aufweisen.

Die elektrisch angesteuerten Ventile können direkt oder indirekt, beispielsweise unter Vorsteuerung, die genannten Funktionen übernehmen. Für eine Weiterbildung der Erfindung steuert ein elektrisch angesteuertes Ventil sowohl einen Eingang des Und-Glieds als auch einen Steuereingang eines pneumatisch angesteuerten Steuerventils, insbesondere eines 3/2-Wegeventils, für eine Ansteuerung mindestens eines Kreisschutzventils an, sodass das Kreisschutzventil über das pneumatisch angesteuerte Steuerventil vorgesteuert ist, was insbesondere zur Luftmengenverstärkung eingesetzt werden kann. Das pneumatisch angesteuerte Steuerventil besitzt neben dem Steuereingang für die Vorsteuerung des Kreisschutzventils einen weiteren Steuereingang. Dieser weitere Steuereingang ist von dem Druck in einer Leitung stromabwärts des Lufttrockners beaufschlagt. Beispielsweise wird dieser Druck vor dem Rückschlagventil in der Zentralleitung abgenommen und kann dem bereitgestellten Druck für mehrere Verbraucherkreise entsprechen. Dieser Druck wird vorzugsweise zwischen Rückschlagventil in der Zentralleitung und dem Lufttrockner entnommen. Erfindungsgemäß steuert das pneumatisch angesteuerte Steuerventil mindestens ein Kreisschutzventil nur dann in eine Sperrstellung, wenn beide Steuereingänge des Steuerventils für mindestens ein Kreisschutzventil (hinreichend) druckbeaufschlagt sind. Damit wird letztendlich die Schaltstellung des so angesteuerten Kreisschutzventils abhängig gemacht von der Druckhöhe in der Leitung zwischen Rückschlagventil und Lufttrockner oder in der Zentralleitung. Wird eine geeignete Druckhöhe für diese Umschaltung vorgegeben, kann das Kreisschutzventil in seine Sperrstellung überführt werden, wenn in dem dem Kreisschutzventil zugeordneten Verbraucherkreis (und damit auch an dem Steueranschluss, der von dem Druck in der Leitung stromabwärts des Lufttrockners beaufschlagt ist) der Betriebsdruck erreicht ist. In diesem Fall wird der zugeordnete Verbraucherkreis über das Kreisschutzventil abgesperrt, während andere Verbraucherkreise auf einen erhöhten Betriebsdruck aufgefüllt werden können, was beispielsweise für einen Luftfederkreis gewünscht sein kann.

Die Erfindung schlägt auch vor, dass ein elektrisch angesteuertes Ventil zusätzlich zu dem Eingang des Und-Glieds wie erläutert auch einen Eingang eines weiteren Und-Glieds ansteuert, sodass letztendlich (zumindest) zwei Und-Glieder eingesetzt sind. Der andere Eingang des weiteren Und-Glieds ist mit einer Leitung stromabwärts des Lufttrockners verbunden, während der Ausgang des weiteren Und-Glieds mit mindestens einem Kreisschutzventil verbunden ist. Das weitere Und-Glied steuert mindestens ein Kreisschutzventil in eine Sperrstellung, wenn beide Eingänge des weiteren Und-Glieds (hinreichend) druckbeaufschlagt sind. So kann die zuvor erläuterte Wirkung der Absperrung eines Verbraucherkreises mit Erreichen des Betriebsdrucks und ein Befüllen weiterer Verbraucherkreise auf einen erhöhten Betriebsdruck auf konstruktiv einfache Weise, nämlich mit Einsatz eines weiteren Und-Glieds, realisiert werden.

Gemäß einer bevorzugten Weiterbildung der Erfindung ist anstelle des weiteren Und-Glieds ein pneumatisch in eine Durchlassstellung steuerbares Überströmventil eingesetzt. In diesem Fall steuert ein elektrisch angesteuertes Ventil sowohl einen Eingang des Und-Glieds als auch einen Eingang des pneumatisch in die Durchlassstellung steuerbaren Überströmventils an. Ein Steuereingang des Überströmventils ist mit einer Leitung stromabwärts des Lufttrockners verbunden. Der Ausgang des Überströmventils ist mit mindestens einem Kreisschutzventil verbunden, wobei das Überströmventil das mindestens eine Kreisschutzventil in eine Durchlassstellung steuert, wenn beide Eingänge des Überströmventils druckbeaufschlagt sind. Somit kann die zuvor erläuterte Wirkung der Absperrung eines Verbraucherkreises mit Erreichen des Betriebsdruckes und das Befüllen eines anderen Verbraucherkreises auf einen höheren Betriebsdruck auch mit der Kombination eines Und-Glieds und eines Überströmventils erzielt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

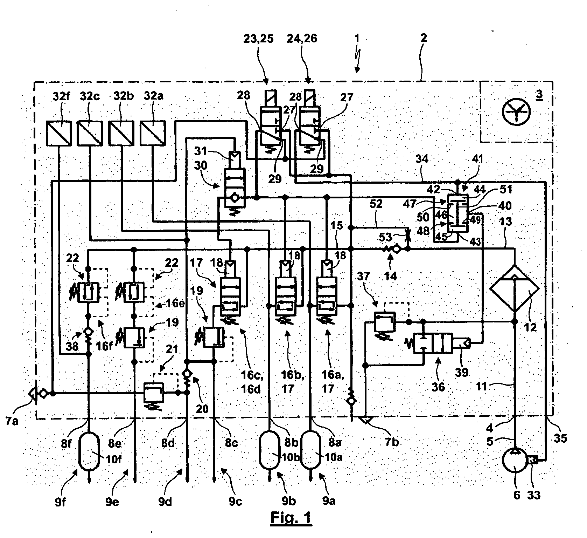

- **Fig. 1 bis 9**: zeigen unterschiedliche erfindungsgemäße Ausgestaltungen einer Druckluftaufbereitungseinrichtung

### FIGURENBESCHREIBUNG

Die Erfindung betrifft eine Druckluftaufbereitungseinrichtung 1 für ein Nutzfahrzeug, welche bspw. die eingangs genannten Funktionen erfüllen soll. Hinsichtlich dieser und weiterer Funktionen können in die erfindungsgemäßen Druckluftaufbereitungseinrichtungen beliebige Ventilelemente auch zusätzlich oder alternativ zu in den Figuren dargestellten Ventilelementen eingesetzt sein, wie diese aus dem Stand der Technik zu Druckluftaufbereitungseinrichtungen, insbesondere gemäß dem eingangs angeführten Stand der Technik, bekannt sind. Gemäß den Figuren ist die Druckluftaufbereitungseinrichtung 1 mit einem Gehäuse 2 ausgebildet, in welches eine Steuereinheit 3 integriert ist. Das Gehäuse 2 besitzt einen Versorgungsanschluss 4, der über eine Versorgungsleitung 5 mit einem Kompressor 6 verbunden ist. Des Weiteren besitzt das Gehäuse mindestens einen Entlüftungsanschluss 7a, 7b sowie Ausgangsanschlüsse 8a bis 8f, welche mit Verbraucherkreisen 9a bis 9f verbunden sind, die sämtlich oder teilweise mit oder ohne Vorratsbehälter 10a, 10b, 10f ausgebildet sein können. Beispielsweise handelt es sich bei den Verbraucherkreisen 9a, 9b um die Betriebsbremskreise I, II, bei dem Verbraucherkreis 9c um einen Anhängerkreis, bei dem Verbraucherkreis 9d um einen Handbremskreis, bei dem Verbraucherkreis 9e um einen Nebenverbraucherkreis und bei dem Verbraucherkreis 9f um einen Luftfederkreis.

In der Druckluftaufbereitungseinrichtung 1 gelangt die von dem Kompressor geförderte Druckluft von dem Versorgungsanschluss 4 über eine Eingangsleitung 11, einen Lufttrockner 12, eine Leitung 13 ausgangsseitig des Lufttrockners und ein Rückschlagventil 14 zu einer Zentralleitung 15. Von der Zentralleitung 15 werden (hier in Parallelschaltung) über Kreisschutzventile 16a bis 16f die Ausgangsanschlüsse 8a bis 8f und damit die Verbraucherkreise 9a bis 9f mit Druckluft versorgt.

Gemäß **Fig. 1** sind die Kreisschutzventile 16a, 16b als pneumatisch ansteuerbare Überströmventile 17 (ohne oder mit begrenzter Rückströmung) ausgebildet, die bei pneumatischer Beaufschlagung eines steuernden Eingangs 18 in eine Durchlassstellung steuerbar sind. Für die Ausgangsanschlüsse 8c, 8d ist dasselbe Kreisschutzventil 16c, 16d zuständig, welches in diesem Fall eine Kombination eines Überströmventils 17 mit steuerndem Eingang 18 und eines nachgeordneten Druckbegrenzungsventils 19 ist. Der Ausgang des Druckbegrenzungsventils 19 verzweigt zu den Ausgangsanschlüssen 8c, 8d, wobei dem Ausgangsanschluss 8d ein in Richtung des Ausgangsanschlusses 8d öffnendes Rückschlagventil 20 sowie eine Verzweigung mit einem Sicherheitsventil 21 zu dem Entlüftungsanschluss 7a vorgeordnet ist. Während das Kreisschutzventil 16e gebildet ist mit der Kombination eines Überströmventils 22, hier mit begrenzter Rückströmung, und einem nachgeordneten Druckbegrenzungsventil 19, ist das Kreisschutzventil 16f mit der Kombination eines Überströmventils 22 mit einem nachgeordneten, in Richtung des Ausgangsanschlusses 8f öffnenden Rückschlagventil 38 gebildet.

Für eine elektropneumatische Ansteuerung der Kreisschutzventile 16a, 16b, 16c, 16d, nämlich eine Ansteuerung der steuernden Eingänge 18 der Überströmventile 17 und Versorgung versorgender Eingänge, sind zwei Ventile 23, 24 vorgesehen, die über die Steuereinheit 3 elektrisch angesteuert sind. Für das dargestellte Ausführungsbeispiel sind die Ventile 23, 24 jeweils als 3/2-Wege-Magnetventil 25, 26 ausgebildet. Die 3/2-Wege-Magnetventile 25, 26 verfügen jeweils über einen Anschluss 27, der von der Zentralleitung 15 mit Druckluft versorgt ist und in der Belüftungsstellung des 3/2-Wege-Magnetventils 25, 26 mit einem Anschluss 28 verbunden ist. Ein weiterer Anschluss 29 der 3/2-Wege-Magnetventile 25, 26 ist mit dem Entlüftungsanschluss 7a verbunden, wobei in einer Entlüftungsstellung der 3/2-Wege-Magnetventile 25, 26 der Anschluss 28 entlüftet ist. Über den Ausgang 28 des 3/2-Wege-Magnetventils 25 erfolgt eine gemeinsame Ansteuerung der steuernden Eingänge 18 der Überströmventile 17 der Kreisschutzventile 16a, 16b. Darüber hinaus steuert der Anschluss 28 auch den steuernden Eingang 18 des Überströmventils 17 des Kreisschutzventils 16c, 16d, wobei hierbei in die Steuerleitung zwischen Anschluss 28 und steuerndem Eingang 18 ein pneumatisch gesteuertes 2/2-Wegeventil 30 zwischengeordnet ist, in welchem für nicht hinreichende Druckbeaufschlagung eines Steueranschlusses 31 ein in Richtung des steuernden Eingangs 18 sperrendes Rückschlagventil wirksam ist, während für hinreichende Druckbeaufschlagung des Steueranschlusses 31 das 2/2-Wegeventil 30 eine Durchlassstellung einnimmt. Dem Steueranschluss 31 wird der Druck stromabwärts des Druckbegrenzungsventils 19 des Kreisschutzventils 16c, 16d (und stromaufwärts des Rückschlagventils 20) zugeführt, was zur Folge hat, dass für hinreichenden Druck in dem Verbraucherkreis 9c das 2/2-Wegeventil in seine Durchlassstellung überführt wird, womit dann auch das Überströmventil 17 in seine Durchlassstellung gesteuert werden kann. Drucksensoren 32a, 32b, 32c, 32f erfassen den Druck an den Ausgangsanschlüssen 8a, 8b, 8c, 8f und damit in den Verbraucherkreisen 9a, 9b, 9c, 9f. Das elektrische Ausgangssignal der Drucksensoren 32a bis c, 32f wird der Steuereinheit 3 zugeführt, um über die Kreisschutzventile 16 eine Steuerung oder Regelung der Drücke in den Verbraucherkreisen 9 durchzuführen und/oder eine Überwachung der ordnungsgemäßen Funktion und des Auftretens einer etwaigen Leckage durchzuführen.

Bei dem Kompressor 6 handelt es sich um einen pneumatisch über einen Steueranschluss 33 steuerbaren Kompressor, wobei je nach an dem Steueranschluss 33 anliegendem Druck eine Beeinflussung der Förderleistung des Kompressors 6 erfolgt. Im Folgenden wird (ohne Einschränkung hierauf) davon ausgegangen, dass mit Druckbeaufschlagung des Steueranschlusses 33 des Kompressors 6 der Kompressor 6 deaktiviert ist, während ohne (hinreichende) Druckbeaufschlagung des Steueranschlusses 33 der Kompressor 6 aktiviert ist. Dies ist insbesondere von Vorteil, um auf einfache Weise auch die Ansteuerung des Kompressors 6 für drucklose Druckluftanlage, beispielsweise für eine Erstbefüllung oder Inbetriebnahme nach längerem Stillstand, zu ermöglichen. Der dem Steueranschluss 33 des Kompressors 6 zugeführte Steuerdruck wird von dem 3/2-Wege-Magnetventil 26 an dem Anschluss 28 ausgesteuert und gelangt über eine Leitung 34 zu dem Ausgangsanschluss 35 der Druckluftaufbereitungseinrichtung 1, der mit dem Steueranschluss 33 verbunden ist. Das 3/2-Wege-Magnetventil 26 ist hier multifunktional ausgebildet, da dieses neben der Steuerung des Kompressors 6 auch der Beeinflussung eines Entlüftungsventils 36 dient, welches zwischen die Eingangsleitung 11 und den Entlüftungsanschluss 7b, vorzugsweise mit parallel zu dem Entlüftungsventil 36 angeordnetem Sicherheitsventil 37, zwischengeschaltet ist. Das Entlüftungsventil 36 verfügt über einen Steueranschluss 39. Ohne (hinreichende) Druckbeaufschlagung des Steueranschlusses 39 befindet sich das Entlüftungsventil 36 in der in Fig. 1 wirksamen Schaltstellung, nämlich einer Sperrstellung. Mit (hinreichender) Druckbeaufschlagung des Steueranschlusses 39 gelangt das Entlüftungsventil 36 in eine Durchlass- und Entlüftüngsstellung, in welcher die Eingangsleitung 11 mit dem Entlüftungsanschluss 7b verbunden ist und somit entlüftet wird. Der Steueranschluss 39 ist mit einem Ausgang 40 eines Und-Glieds 41 verbunden, über welches das Entlüftungsventil 36 gesteuert werden kann. Ein Eingang 42 des Und-Glieds 41 ist mit der Leitung 34 verbunden. Der andere Eingang 43 des Und-Glieds 41 ist mit dem Anschluss 28 des 3/2-Wege-Magnetventils 25 verbunden. Das Und-Glied 41 ist derart ausgebildet, dass der Ausgang 40 ausschließlich druckbeaufschlagt ist, wenn an beiden Eingängen 42, 43 Druck anliegt. Hingegen ist der Ausgang 40 nicht druckbeaufschlagt, wenn an einem Eingang 42, 43 oder an beiden Eingängen 42, 43 kein Druck anliegt.

Für die konstruktive Ausgestaltung des Und-Glieds 41 gibt es vielfältige Möglichkeiten. Für die in Fig. 1 gewählte Ausführungsform, die hier schematisch dargestellt ist, verfügt das Und-Glied jeweils über den Eingängen 42, 43 zugeordnete Eingangskammern 44, 45 sowie eine dem Ausgang 40 zugeordnete Ausgangskammer 46. Die Ausgangskammer 46 ist von den Eingangskammern 44, 45 jeweils über ein Ventil 47, 48 getrennt. Die Ventile 47, 48 besitzen jeweils einen Ventilsitz 49, 50, welche mit einem gemeinsamen Ventilkörper 51 zusammenwirken. Der Ventilkörper 51 verfügt über zwei Ventilteller, welche auf der Ausgangskammer 46 abgewandten Seite mit dem Ventilsitz 49, 50 in Wechselwirkung treten können. Ist der Druck in der Eingangskammer 44 größer als in der Eingangskammer 45, wird in Fig. 1 der Ventilkörper 51 nach unten gepresst, womit der obere Ventilteller des Ventilkörpers 51 gegen den Ventilsitz 50 gepresst wird. Dies hat zur Folge, dass die Eingangskammer 45, in welcher der Druck niedriger ist oder die entlüftet ist, mit dem Ausgang 40 verbunden ist. Umgekehrt wird der Ventilkörper 51 nach oben gedrückt, wenn der Druck in der Eingangskammer 45 größer ist als in der Eingangskammer 44, womit das Ventil 48 abgesperrt ist und das Ventil 47 geöffnet wird. Eine Einschränkung der Erfindung auf eine derartige konstruktive Ausgestaltung des Und-Glieds 41 soll aber nicht erfolgen, vgl. auch die in den folgenden Figuren dargestellten abweichenden Ausführungsformen des Und-Glieds 41.

Alternativ oder zusätzlich zu an sich bekannten Funktionen der Druckluftaufbereitungseinrichtung 1 (s. diesbezüglich auch den Stand der Technik gemäß Beschreibungseinleitung) ermöglicht die erfindungsgemäße Ausgestaltung folgende Betriebsfunktionen:
- Soll die Druckluftanlage befüllt werden, wird der Kompressor 6 zur Druckluftförderung angesteuert, wozu der Steueranschluss 33 durch die Umschaltung des 3/2-Wege-Magnetventils 26 in die Entlüftungsstellung entlüftet wird. Dies hat unabhängig von dem Druck an dem Eingang 43 des Und-Glieds 41 zur Folge, dass das Entlüftungsventil 36 seine Sperrstellung einnimmt, wodurch vermieden ist, dass der Kompressor 6 Druckluft über das Entlüftungsventil 36 und den Entlüftungsanschluss 7b in die Atmosphäre fördert. Es erfolgt somit die an sich bekannte Befüllung der Druckluftanlage in einer Lastphase, wobei der Lastbetrieb des Kompressors 6 unverändert fortgesetzt wird unabhängig davon, in welcher Schaltstellung sich das 3/2-Wege-Magnetventil 25 befindet. Ist der Druck in dem Verbraucherkreis 9c hinreichend angestiegen, schaltet das 2/2-Wegeventil 30 um in seine Durchlassstellung, womit über das 3/2-Wege-Magnetventil 25 eine gemeinsame Ansteuerung der Kreisschutzventile 16 der Verbraucherkreise 16a, 16b und 16c/16d möglich ist.
- Ist die Druckluftanlage hinreichend befüllt, wird der Kompressor 6 abgeschaltet, indem der Steueranschluss 33 druckbeaufschlagt wird. Dies erfolgt durch Umschaltung des 3/2-Wege-Magnetventils 26 in die Belüftungsstellung. Für derart deaktivierten Kompressor können über das 3/2-Wege-Magnetventil 25 zwei unterschiedliche Betriebsfunktionen gewährleistet werden:
   a) Befindet sich das 3/2-Wege-Magnetventil 25 in seiner Entlüftungsstellung, befinden sich die Überströmventile 17 der Kreisschutzventile 16a, 16b wie in Fig. 1 dargestellt in ihrer Überströmventil-Stellung. Der Eingang 43 des Und-Glieds 41 und damit auch der Ausgang 40 und der Steueranschluss 39 sind entlüftet, womit das Entlüftungsventil 36 in seiner Sperrstellung verbleibt. Diese Betriebsstellung wird genutzt während des normalen Fahrbetriebs, in dem keine Regeneration des Lufttrockners 12 erfolgt und kein Druckluftverbrauch auftritt oder ein Druckluftverbrauch auftritt, während die erforderlichen Mindestdrücke in den Verbraucherkreisen gewährleistet sind.
   b) Ist hingegen eine Regeneration erwünscht, erfolgt über das 3/2-Wege-Magnetventil 25 eine Druckbeaufschlagung des Eingangs 43, womit infolge des ebenfalls druckbeaufschlagten Eingangs 42 die Druckbeaufschlagung des Ausgangs 40 und damit auch des Steueranschlusses 39 erfolgt mit damit einhergehender Umschaltung des Entlüftungsventils 36 in seine Entlüftungsstellung. In diesem Fall kann über eine Bypassleitung 52, welche das Rückschlagventil 14 umgeht, ggf. mit integrierter Drossel 53, Druckluft aus den Verbraucherkreisen rückwärts den Lufttrockner 12 durchströmen und über das Entlüftungsventil 36 und den Entlüftungsanschluss 7b in die Atmosphäre abgeführt werden, womit eine Regeneration des Lufttrockners 12 erfolgt. Hierzu sind infolge des 3/2-Wege-Magnetventils 25 in der Belüftungsstellung die Steueranschlüsse 18 druckbeaufschlagt, sodass sich die Überströmventile 17 der Kreisschutzventile 16a, 16b in ihre Durchgangsstellung geschaltet sind, sodass aus den Vorratsbehältern 10a, 10b Druckluft für die Regeneration entnommen werden kann.

Die Funktion des 2/2-Wegeventils 30 ist wie folgt: Mit dem Befüllen der Druckluftanlage werden zunächst durch geeignete Ansteuerung der Steueranschlüssen 18 die beiden Kreisschutzventile 16a, 16b, die den Verbraucherkreisen 9a, 9b, also den Betriebsbremskreisen, zugeordnet sind, in ihre Öffnungsstellung überführt. Es erfolgt ein Befüllen der Betriebsbremskreise I, II beispielsweise auf einen Druck von 6 bis 7 bar, während das Kreisschutzventil 16c, 16d, welches dem Anhängerbremskreis zugeordnet ist, noch in seiner Schließstellung verbleibt, da der erforderliche Druck zum Öffnen des Überströmventils nicht erreicht ist. Wird der Öffnungsdruck dieses Kreisschutzventils 16c, 16d, beispielsweise von 5 bar erreicht, erfolgt ein Befüllen des Verbraucherkreises 9c. Mit diesem Befüllen des Verbraucherkreises 9c steigt dann auch der Druck an dem Steueranschluss 31 des 2/2-Wegeventils 30, womit dann die Ansteuerung des Kreisschutzventils 16c, 16d auch über das Ventil 23 möglich wird.

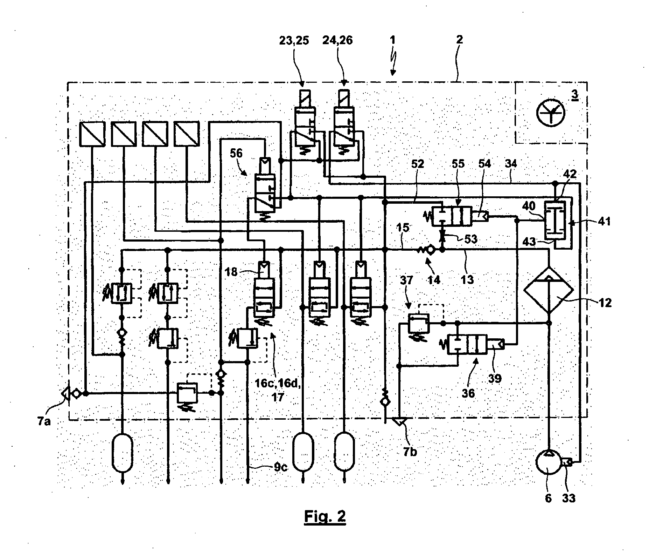

**Fig. 2** zeigt eine bis auf im Folgenden erläuterte Änderungen Fig. 1 entsprechende Ausgestaltung einer Druckluftaufbereitungseinrichtung 1. Hier ist bei entsprechender pneumatischer Verbindung der Eingänge 42, 43 des Und-Glieds 41 der Ausgang 40 multifunktional eingesetzt, indem dieser nicht nur den Steueranschluss 39 des Entlüftungsventils 36 ansteuert, sondern über eine abzweigende Steuerleitung auch einen Steueranschluss 54 eines Bypassventils 55 ansteuert, welches in die Bypassleitung 52 integriert ist. Für den zuvor auf Grundlage von Fig. 1 beschriebenen Regenerationsbetrieb erfolgt durch die gleichzeitige Ansteuerung der Steuereingänge 39 des Entlüftungsventils 36 und des Steuereingangs 54 des Bypassventils 55 die Ermöglichung des Regenerationsbetriebs.

Wird gemäß Fig. 1 die Regenerationsphase beendet durch Überführen des Entlüftungsventils 36 in die Sperrstellung, ist zu diesem Zeitpunkt auch der Lufttrockner 12 entlüftet. Infolge des höheren Drucks in den Verbraucherkreisen und der Zentralleitung 15 strömt weiter über die Bypassleitung 52 und die Drossel 53 Druckluft, so lange der Druck in der Zentralleitung 15 kleiner ist als in dem Lufttrockner. Diese Strömung von Druckluft stellt einen unerwünschten Druckluftverbrauch dar. Die erläuterte Rückströmung mit dem Befüllen des Lufttrockners 12 auf den Druck in der Zentralleitung 15 kann vermieden werden durch die Ausgestaltung gemäß Fig. 2, wo gleichzeitig mit dem Schließen des Entlüftungsventils 36 das Bypassventil 55 in seine Sperrstellung überführt wird.

Des Weiteren ist abweichend zu der Ausführungsform gemäß Fig. 1 anstelle des 2/2-Wegeventils 30 ein pneumatisch angesteuertes 3/2-Wegeventil 56 eingesetzt, welches ohne hinreichenden Druck in dem Verbraucherkreis 9c seine Entlüftungsstellung einnimmt, während dieses mit hinreichendem Druck in dem Verbraucherkreis 9c eine Belüftungsstellung einnimmt mit entsprechender Beaufschlagung des Steueranschlusses 18 des Überströmventils 17 des Kreisschutzventils 16c, 16d.

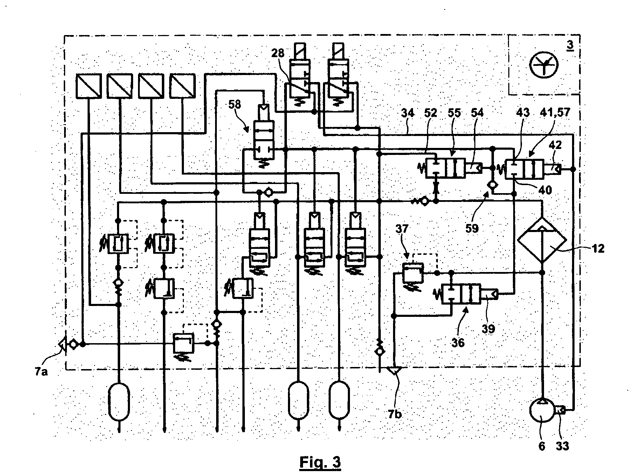

Gemäß **Fig. 3** findet ein Und-Glied 41 in abweichender Bauweise Einsatz: Hier ist das Und-Glied 41 als pneumatisch angesteuertes 2/2-Wegeventil 57 ausgebildet, wobei der Eingang 42 ein Steuereingang ist, welcher mit der Leitung 34 verbunden ist, und der Eingang 43 ein versorgender Eingang ist, welcher mit dem Anschluss 28 des 3/2-Wege-Magnetventils 25 verbunden ist. Liegt in diesem Fall für das 3/2-Wege-Magnetventil 26 in der Entlüftungsstellung an dem steuernden Eingang 42 kein Druck an, befindet sich das Und-Glied 41 in der Sperrstellung, was zur Folge hat, dass der Ausgang 40 drucklos ist und bleibt. Ist hingegen der steuernde Eingang 42 druckbeaufschlagt, da das 3/2-Wege-Magnetventil 26 in seine Belüftungsstellung umgeschaltet ist, ist der Ausgang 40 des Und-Glieds 41 in der so herbeigeführten Durchlassstellung desselben nur druckbeaufschlagt, wenn auch Druck an dem Eingang 43 anliegt, also das 3/2-Wege-Magnetventil 25 in seiner Belüftungsstellung ist. Somit kann bei abweichender Ausgestaltung des Und-Glieds 41 dieselbe Funktionalität gewährleistet werden wie mit dem Und-Glied 41 gemäß Fig. 1.

Für das in Fig. 3 dargestellte Ausführungsbeispiel ist entsprechend Fig. 2 in die Bypassleitung 52 ebenfalls ein pneumatisch angesteuertes Bypassventil 55 integriert. In diesem Fall ist aber der Steueranschluss 54 des Bypassventils 55 verbunden mit dem Anschluss 28 des 3/2-Wege-Magnetventils 25, über welches somit der Regenerationsbetrieb mit einer Druckbeaufschlagung eingeleitet wird. Für das Ausführungsbeispiel gemäß Fig. 3 wird das Und-Glied 41 angesteuert und versorgt durch die beiden 3/2-Wege-Magnetventile 25, 26, wobei das 3/2-Wege-Magnetventil 25 multifunktional ist mit der gleichzeitigen Ansteuerung sowohl des Und-Glieds 41 als auch des Bypassventils 55.

Abweichend zu Fig. 1 und 2 ist für das Ausführungsbeispiel gemäß Fig. 3 anstelle des 2/2-Wegeventils 30 bzw. des 3/2-Wegeventils 56 ein pneumatisch angesteuertes 2/2-Wegeventil 58 in Ausbildung als Sperrventil eingesetzt. Um nach Überführung des 2/2-Wegeventils 57 in seine Sperrstellung und Aktivierung des Kompressors 6 die Entlüftung des Steueranschlusses 39 des Entlüftungsventils 36 zu ermöglichen, ist die Leitung zwischen dem Steueranschluss 39 und dem Ausgang 40 des Und-Glieds 41 über ein Rückschlagventil 59 mit dem Anschluss 28 des 3/2-Wege-Magnetventils 25 verbunden, wobei das Rückschlagventil zur Ermöglichung der Entlüftung in Richtung des 3/2-Wege-Magnetventils 25 öffnet. Mit dem Ausführungsbeispiel gemäß Fig. 3 kann u. U. eine weitere Funktion ermöglicht werden: Um eine Regeneration zu ermöglichen, werden beide Magnetventile 23, 24 bestromt. Soll während oder nach einem Regenerationsvorgang noch die Kompressorleitung gespült werden (bspw. von Fremdbestandteilen wie Öl, Wasser, Schmutz), so kann durch Umschalten des Magnetventils 24 in seine Ruhestellung der Kompressor 6 in die Förderstellung geschaltet werden, ohne jedoch das Entlüftungsventil 36 in die Schließstellung zu überführen.

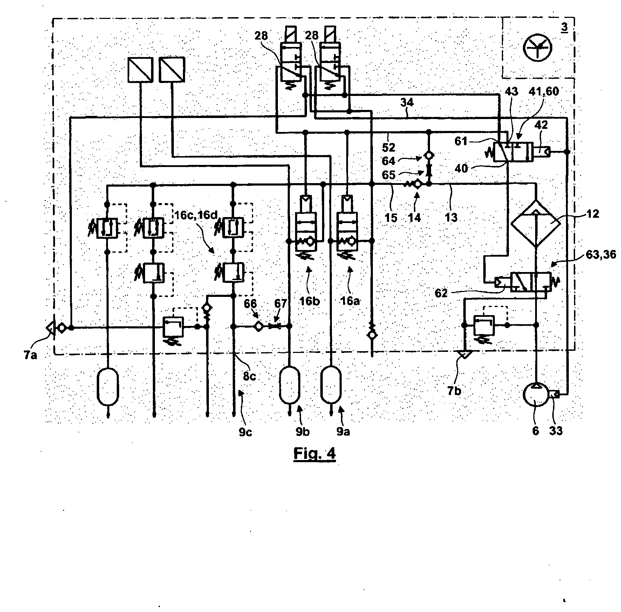

Für das in **Fig. 4** dargestellte Ausführungsbeispiel ist das Und-Glied 41 als pneumatisch angesteuertes 3/2-Wegeventil 60 ausgebildet mit einem steuernden Eingang 42, der über die Leitung 34 mit dem Ausgang 28 des 3/2-Wege-Magnetventils 26 verbunden ist. Der versorgende Eingang 43 des 3/2-Wege-Ventils 60 ist mit dem Ausgang 28 des 3/2-Wege-Magnetventils 25, welches hier zusätzlich zu dem Und-Glied 41 ausschließlich die Kreisschutzventile 16a, 16b ansteuert, verbunden. Ein weiterer Eingang 61 des 3/2-Wegeventils 60 ist mit dem Entlüftungsanschluss 7a verbunden. Der Ausgang 40 steuert einen Steueranschluss 62 eines pneumatisch gesteuerten 3/2-Wegeventils 63 an, von dem ein Anschluss mit dem Lufttrockner 12 verbunden ist, ein Anschluss mit dem Kompressor 6 verbunden ist und ein Anschluss ohne zusätzliches Entlüftungsventil 36 mit dem Entlüftungsanschluss 7b verbunden ist. In der in Fig. 4 wirksamen Schaltstellung des 3/2-Wegeventils 63 ohne Druckbeaufschlagung des Steueranschlusses 62 ist die Verbindung zum Entlüftungsanschluss 7b abgesperrt, während das 3/2-Wegeventil 63 den Kompressor 6 mit dem Lufttrockner 12 verbindet. Hingegen führt die Druckbeaufschlagung des Steueranschlusses 62 zur Umschaltung des 3/2-Wegeventils 63 in eine Entlüftungsstellung, in welcher die Verbindung zu dem Kompressor 6 abgesperrt ist, während das 3/2-Wegeventil 63 eine Verbindung des Lufttrockners 12 mit dem Entlüftungsanschluss 7b schafft. Hier ist das Entlüftungsventil 36 mit dem 3/2-Wegeventil 63 gebildet. Somit korreliert die erstgenannte Schaltstellung mit dem Lastbetrieb des Kompressors, während die zweitgenannte Schaltstellung für eine Regeneration genutzt wird. Für das in Fig. 4 dargestellte Ausführungsbeispiel findet kein Bypassventil 55 Einsatz. Vielmehr ist der Ausgang 28 des 3/2-Wege-Magnetventils 25 über ein Rückschlagventil 64 mit nachgeordneter Drossel 65 mit der Leitung 13 verbunden. Die Bypassleitung 52 verläuft in diesem Fall von der Zentralleitung 15 über das 3/2-Wege-Magnetventil 25 in der Belüftungsstellung und Rückschlagventil 64 sowie Drossel 65 zu der Leitung 13. Über das Und-Glied 41 wird der Steueranschluss 62 des 3/2-Wegeventils 63 lediglich druckbeaufschlagt, wenn der Steueranschluss 42 druckbeaufschlagt ist, also der Kompressor 6 deaktiviert ist und das 3/2-Wege-Magnetventil 26 in seiner Belüftungsstellung ist. Gleichzeitig muss der Eingang 43 belüftet sein, was erfordert, dass das 3/2-Wege-Magnetventil 25 in seiner Belüftungsstellung ist, was gleichzeitig zur Folge hat, dass die Bypassleitung 52 geöffnet ist.

Fig. 4 ist zu entnehmen, dass anstelle der Überströmventile 17 für die Kreisschutzventile 16a, 16b auch ein 2/2-Wegeventil mit pneumatischem Steueranschluss eingesetzt sein kann, bei welchem für nicht druckbeaufschlagten Steueranschluss ein in Richtung der Zentralleitung 15 sperrendes Rückschlagventil wirksam ist, während für druckbeaufschlagten Steueranschluss das Kreisschutzventil 16a, 16b eine Durchlassstellung einnimmt.

Zu erkennen ist in Fig. 4 auch, dass möglich ist, dass die zu dem Ausgangsanschluss 8c führende Leitung stromabwärts des Kreisschutzventils 16c, 16d über ein in Richtung des Verbraucherkreis 9b öffnendes Rückschlagventil 66 mit nachgeordneter Drossel 67 pneumatisch mit dem Verbraucherkreis 9b gekoppelt ist. Die Kombination des Rückschlagventils 66 und der Drossel 67 stellt das so genannte "EG-Ventil" dar. Entweicht beispielsweise über Nacht Druckluft aus dem Betriebsbremskreis II, hätte dieses bei separater Ausgestaltung des Verbraucherkreises 9c und 9d für die Handbremse den Nachteil, dass die Handbremse gelöst werden könnte, ohne dass in dem Betriebsbremskreis II ein ausreichender Druck vorhanden ist. Durch eine Verbindung der Verbraucherkreise 9b, 9c über das Rückschlagventil 66 und die Drossel 67 kann ein Druckausgleich zwischen den genannten Verbraucherkreisen 9b, 9c herbeigeführt werden. Fällt dann in beiden Verbraucherkreisen 9b, 9c der Druck ab, ist zwar der Druck für die Betätigung des Betriebsbremskreises II nicht ausreichend, es kann dann aber auch die Handbremse nicht gelöst werden. Möglich ist somit angesichts der Verbindung über das Rückschlagventil 66 und die Drossel 67, dass der Druck in dem Verbraucherkreis 9c abfällt, ohne dass dies zu einem Druckabfall in dem Verbraucherkreis 9b führt, während der Abfall des Drucks in dem Verbraucherkreis 9b, also dem Betriebsbremskreis II, mit einem Druckverlust in dem Verbraucherkreis 9c verbunden ist.

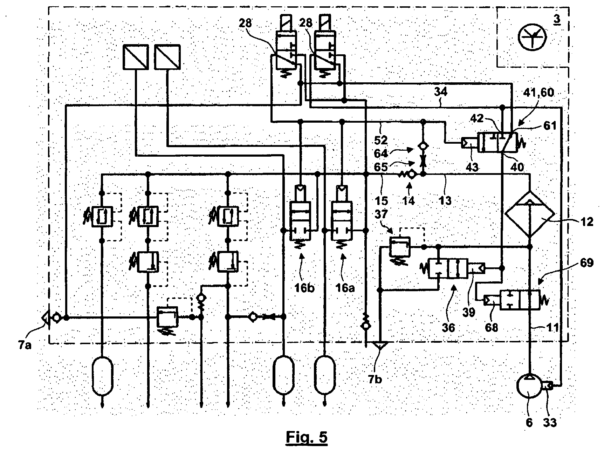

Abweichend zu Fig. 4 sind gemäß **Fig. 5** als Kreisschutzventile 16a, 16b pneumatisch angesteuerte 2/2-Wegeventile in Ausbildung als Sperrventile eingesetzt, die drucklos ihre Sperrstellung einnehmen. Auch hier ist entsprechend Fig. 4 das 3/2-Wege-Magnetventil 25 in die Bypassleitung 52 integriert mit nachgeordnetem Rückschlagventil 64 und Drossel 65. Das 3/2-Wegeventil 60, welches das Und-Glieds 41 bildet, ist hier abweichend in die Druckluftaufbereitungseinrichtung integriert: Der steuernde Anschluss 43 ist hier mit dem Ausgang 28 des 3/2-Wege-Magnetventils 25 verbunden, während der versorgende Eingang 42 mit der Leitung 34 verbunden ist. Der weitere Eingang 61 ist mit dem Entlüftungsanschluss 7a verbunden.

Der Ausgang 40 ist in diesem Fall multifunktional ausgebildet: Der Ausgang 40 ist einerseits verbunden mit dem Steueranschluss 39 des Entlüftungsventils 36. Darüber hinaus ist der Ausgang 40 verbunden mit einem Steueranschluss 68 eines pneumatisch angesteuerten 2/2-Wegeventils in Ausbildung als Sperrventil, welches ohne Druckbeaufschlagung des Steueranschlusses 68 seine Durchlassstellung einnimmt. Das 2/2-Wegeventil 69 ist zwischen dem Kompressor 6 und dem Lufttrockner 12 in die Eingangsleitung 11 integriert. Auch hier ist der Ausgang 40, und sind damit die Steueranschlüsse 39, 68 lediglich druckbeaufschlagt, wenn sowohl Druck an dem steuernden Eingang 43 anliegt als auch Druck an dem versorgenden Anschluss 42 anliegt. Dies ist lediglich der Fall, wenn beide 3/2-Wege-Magnetventile 25, 26 in ihrer Belüftungsstellung sind, was die Folge hat, dass die Bypassleitung 52 geöffnet ist, das Entlüftungsventil 36 in seiner Entlüftungsstellung ist und das 2/2-Wegeventil 69 seine Sperrstellung einnimmt. Somit erfolgt bei abgeschaltetem Kompressor 6 eine Regeneration des Lufttrockners 12.

Für die in Fig. 4 und 5 dargestellten Ausführungsformen ist der Leitungsstrang zwischen 3/2-Wegeventil 63 bzw. 2/2-Wegeventil 69 und dem Kompressor während der Regeneration abgesperrt. Dies hat zur Folge, dass dieser Leitungsstrang während der Regeneration nicht entlüftet wird. In einem an die Regeneration anschließenden Lastbetrieb des Kompressors 6 muss somit dieser Leitungsstrang nicht erst wieder mit Druckluft gefüllt werden, wodurch sich letztendlich ein verbesserter Wirkungsgrad und eine schnellere Befüllung der Druckluftanlage ergeben kann.

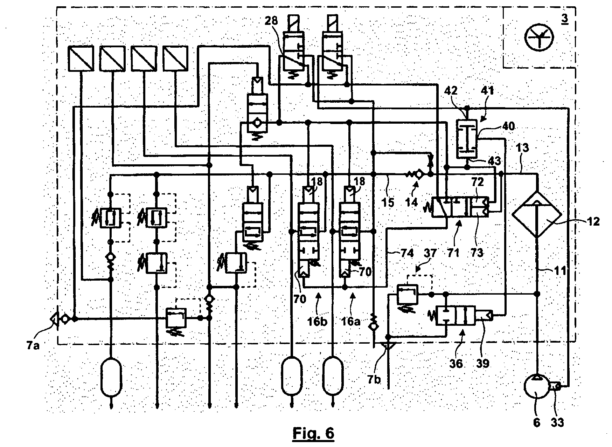

Gemäß **Fig. 6** findet ein Und-Glied 41 Einsatz, welches entsprechend Fig. 1 ausgebildet und von den 3/2-Wege-Magnetventilen 25, 26 angesteuert ist.

Gemäß Fig. 6 besitzen die Kreisschutzventile 16a, 16b drei Schaltstellungen, nämlich eine Durchlassstellung, eine Stellung mit wirksamer Überströmfunktion und eine Sperrstellung. Zusätzlich zu den Steueranschlüssen 18, mit deren Druckbeaufschlagung durch das 3/2-Wege-Magnetventil die Kreisschutzventile 16a, 16b in ihre Durchlassstellung überführt werden können, verfügen die Kreisschutzventile 16a, 16b über gegenüberliegende Steueranschlüsse 70, mit deren Druckbeaufschlagung die Kreisschutzventile 16a, 16b in ihre Sperrstellung überführt werden können. Die Steueranschlüsse 70 werden hierbei angesteuert von einem 3/2-Wegeventil 71, von dem ein Anschluss mit dem Entlüftungsanschluss 7a verbunden ist, während der andere Anschluss mit dem Eingang 43 des Und-Glieds 41 und somit dem Ausgang 28 des 3/2-Wege-Magnetventils 25 verbunden ist. Das 3/2-Wegeventil 71 besitzt zwei in dieselbe Richtung gegen eine Feder wirkende pneumatische Steueranschlüsse 72, 73. Der Steueranschluss 72 ist mit dem Eingang 43 des Und-Glieds 41 pneumatisch verbunden, während der Steueranschluss 73 mit der Leitung 13 zwischen dem Rückschlagventil 14 und dem Lufttrockner 12 verbunden ist. Erst wenn beide Steueranschlüsse 72, 73 hinreichend druckbeaufschlagt sind, wird das 3/2-Wegeventil 71 von der in Fig. 6 wirksamen Entlüftungsstellung umgeschaltet in die Belüftungsstellung. Somit ist die Umschaltung und die Herbeiführung der Sperrstellung der Kreisschutzventile 16a, 16b davon abhängig, dass sowohl das 3/2-Wege-Magnetventil 25 in seiner Belüftungsstellung ist als auch ein hinreichender Druck in der Leitung 13 vorhanden ist, also der Kompressor 6 im Förderbetrieb ist und eine ausreichende Befüllung der Druckluftanlage erfolgt ist, deren Druckhöhe vorgegeben ist durch die Rückstellfeder des 3/2-Wegeventils 71. Beispielsweise kann das erforderliche Druckniveau so eingestellt werden, dass das 3/2-Wegeventil 71 seine Belüftungsstellung einnimmt, wenn in der Leitung 13 und damit auch in den Verbraucherkreisen 9a, 9b ein Druckniveau von zehn bar erreicht ist, was dem Betriebsdruck in den Betriebsbremskreisen entspricht. Durch die dann erfolgende Umschaltung kann ein Absperren der Verbraucherkreise 9a, 9b erfolgen, während weitere Verbraucherkreise auf ein höheres Druckniveau aufgefüllt werden können.

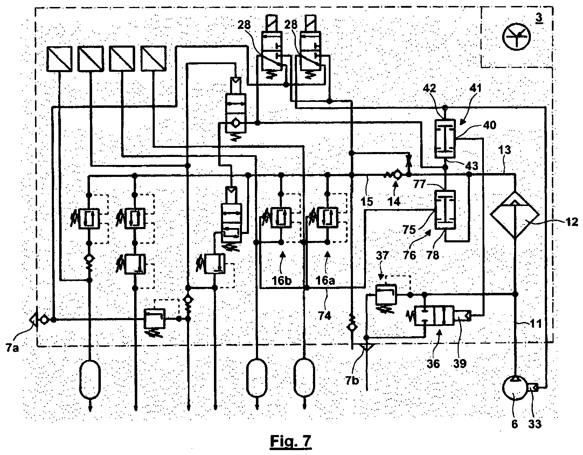

Eine entsprechende Funktion kann gemäß **Fig. 7** gewährleistet werden, wenn die Kreisschutzventile 16a, 16b als pneumatisch sperrbare Überströmventile ausgebildet sind. Dieses pneumatische Sperren kann über eine gemeinsame Steuerleitung 74 erfolgen. Die Steuerleitung 74 ist verbunden mit einem Ausgang 75 eines weiteren Und-Glieds 76, von dem ein Eingang 77 mit dem Eingang 43 des Und-Glieds 41 und damit auch dem Ausgang 28 des 3/2-Wege-Magnetventils 25 verbunden ist, während der andere Eingang 78 mit der Leitung 13 verbunden ist. Das Sperren der Kreisschutzventile 16a, 16b erfordert auch in diesem Fall, dass sowohl der Eingang 77 durch das 3/2-Wege-Magnetventils 25 belüftet wird als auch an dem Eingang 78 hinreichender Druck aus der Leitung 13 anliegt, sodass eine hinreichende Befüllung der Betriebsbremskreise 9a, 9b erfolgt ist.

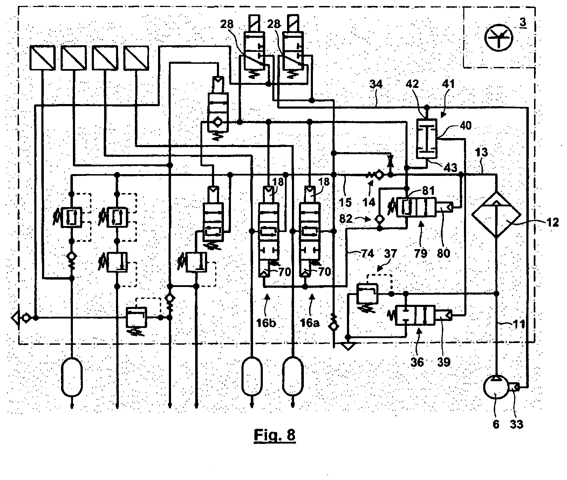

Gemäß **Fig. 8** finden entsprechend Fig. 6 Kreisschutzventile 16a, 16b Einsatz mit drei Schaltstellungen, nämlich einer Durchlassstellung, einer Stellung mit wirksamem Überströmventil und einer Sperrstellung, sowie mit zwei gegenüberliegenden Steueranschlüssen 18, 70. In diesem Fall erfolgt die Ansteuerung der Steueranschlüsse 70 über ein pneumatisch angesteuertes Überströmventil 79, welches ohne Druckbeaufschlagung eines Steueranschlusses 80 die in Fig. 8 wirksame Überström-Stellung einnimmt, während mit Druckbeaufschlagung des Steueranschlusses 80 das Überströmventil 79 eine Durchlassstellung einnimmt. Ein Anschluss 81 ist mit dem Eingang 43 des Und-Glieds 41 und damit dem Ausgang 28 des 3/2-Wege-Magnetventils 25 verbunden. Dem Überströmventil 79 ist ein Rückschlagventil 82 parallel geschaltet, welches in Richtung von der Steuerleitung 74 zu dem Anschluss 28 des 3/2-Wege-Magnetventils 25 öffnet. Der Steueranschluss 80 des Überströmventils 79 ist mit der Leitung 13 verbunden, sodass das Überströmventil 79 in seine Durchlassstellung gesteuert wird, wenn in dem Lufttrockner 12 und der Leitung 13 eine gewisse Druckschwelle erreicht bzw. überschritten ist.

Über das pneumatisch angesteuerte Überströmventil 79 kann eine Druckbegrenzung für das Kreisschutzventil 16a, 16b wie folgt herbeigeführt werden: Ist in der Leitung 13 und in dem Lufttrockner 12 ein nicht ausreichender Druck für die Befüllung der Betriebsbremskreise I, II vorhanden, der beispielsweise kleiner ist 10 bar, liegt an dem Steueranschluss 80 des Überströmventils 79 ein Druck an, welcher nicht ausreichend ist, um das Überströmventil 79 in seine Öffnungsstellung zu überführen. Damit liegt auch an den Steueranschlüssen 70 der Kreisschutzventile 16a, 16b kein Steuerdruck an, sodass die Sperrstellung der Kreisschutzventil 16a, 16b nicht herbeigeführt wird und ein weiteres Befüllen der Betriebsbremskreise möglich ist. Während dieses Schaltzustandes des Überströmventils 79 nimmt dieses seine Überströmfunktion ein, sodass hierüber je nach Schaltstellung des Ventils 23 die Steuereingänge 70 pneumatisch beaufschlagt werden können oder nicht. Ist hingegen der Druck in dem Betriebsbremskreisen I, II auf beispielsweise 10 bar angestiegen, wird das Überströmventil 79 in seine Durchlassstellung überführt, womit die Kreisschutzventile 16a, 16b ihre Sperrstellung einnehmen, womit dann möglich ist, dass weitere Verbraucherkreise 9c bis 9f auf einen höheren Druck aufgefüllt werden.

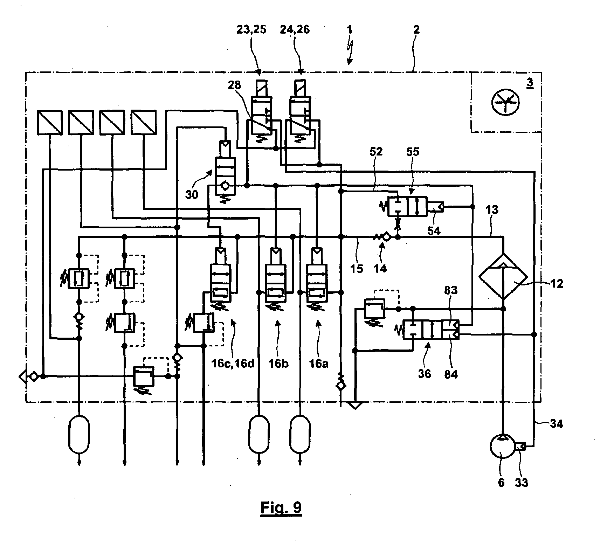

**Fig. 9** zeigt eine Ausgestaltung der Erfindung, bei welcher kein Und-Glied 41 eingesetzt ist. Vielmehr ist für diese Ausgestaltungsform das Entlüftungsventil 36 mit zwei Steueranschlüssen 83, 84 ausgestattet. Der Steueranschluss 83 ist unmittelbar mit dem Ausgang 28 des Ventils 23 verbunden, welches hier zusätzlich auch das Bypassventil 55, die Kreisschutzventile 16a, 16b und (über das 2/2-Wegeventil 30) auch das Kreisschutzventil 16c, 16d ansteuert. Eine Umschaltung des Entlüftungsventils 36 erfolgt lediglich, wenn beide Steueranschlüsse 83, 84 druckbeaufschlagt sind, also beide Ventile 23, 24 in ihrer Belüftungsstellung sind. Auf diese Weise kann gewährleistet werden, dass für beide Ventile 23, 24 in der Belüftungsstellung der Kompressor 6 deaktiviert ist, das Bypassventil 55 geöffnet ist und das Entlüftungsventil 36 in der Durchlassstellung ist, sodass eine Regeneration erfolgen kann. Diese wird unterbrochen, wenn das Ventil 23 in die Entlüftungsstellung überführt wird und/oder wenn das Ventil 24 in die Entlüftungsstellung überführt wird, also ein Lastbetrieb des Kompressors 6 aufgenommen wird.

In den Figuren ist die Druckluftaufbereitungseinrichtung 1 mit einem einzigen Gehäuse gebildet, in welches auch die Steuereinheit 3 integriert ist. Möglich ist, dass die Druckluftaufbereitungseinrichtung 1 mit mehreren Modulen gebildet ist, welche bspw. über Leitungsverbindungen miteinander gekoppelt sind oder aneinander befestigt oder angeflanscht werden können, wobei die miteinander zu kombinierenden Module je nach Einsatzfall variieren können. Der Einsatz der in der Druckluftaufbereitungseinrichtung 1 eingesetzten pneumatischen Bauelemente, insbesondere für die Kreisschutzventile, deren Funktionen und Ansteuerung sowie Verbindungsmöglichkeiten zur Kopplung einzelner Verbraucherkreise, kann im Rahmen der Erfindung abweichend zu den dargestellten Ausführungsformen variiert werden, insbesondere auf Grundlage des eingangs genannten Standes der Technik.

## Patentansprüche

1. Druckluftaufbereitungseinrichtung (1) für ein Nutzfahrzeug mit einem elektrisch angesteuerten Ventil (24), welches sowohl einen Kompressor (6) ansteuert als auch ein für eine Regeneration und/oder Druckregelung genutztes Entlüftungsventil (36) ansteuert, wobei das Entlüftungsventil sowohl von dem elektrisch angesteuerten Ventil (24), welches den Kompressor (6) ansteuert, als auch von einem weiteren elektrisch angesteuerten Ventil (23) angesteuert ist, **dadurch gekennzeichnet, dass** das Entlüftungsventil (36) zwei auf gleichen Seiten angeordnete Steueranschlüsse (83, 84) besitzt, wobei ein Steueranschluss (84) mit dem elektrisch angesteuerten Ventil (24), welches den Kompressor (6) ansteuert, verbunden ist und ein Steueranschluss (83) mit dem weiteren elektrisch angesteuerten Ventil (23) verbunden ist.

2. Druckluftaufbereitungseinrichtung (1) für ein Nutzfahrzeug mit einem elektrisch angesteuerten Ventil (24), welches sowohl einen Kompressor (6) ansteuert als auch ein für eine Regeneration und/oder Druckregelung genutztes Entlüftungsventil (36) ansteuert, wobei das Entlüftungsventil sowohl von dem elektrisch angesteuerten Ventil (24), welches den Kompressor (6) ansteuert, als auch von einem weiteren elektrisch angesteuerten Ventil (23) angesteuert ist, **dadurch gekennzeichnet, dass** ein pneumatisches Und-Glied (41) vorhanden ist, von dem ein Eingang (42) mit dem Ventil (24) verbunden ist und dessen Ausgang (40) das Entlüftungsventil (36) ansteuert, wobei der andere Eingang (43) des pneumatischen Und-Glieds (41) mit dem weiteren elektrisch angesteuerten Ventil (23) verbünden ist.

3. Druckluftaufbereitungseinrichtung (1) nach einem der vorhergehenden Ansprüche, **dadurch gekennzeichnet, dass** das weitere Ventil (23) auch mindestens einen pneumatischen Steueranschluss (18) eines Kreisschutzventils (16a; 16b; 16c, 16d) ansteuert.

4. Druckluftaufbereitungseinrichtung (1) nach einem der vorhergehenden Ansprüche, **dadurch gekennzeichnet, dass** das weitere Ventil (23) auch ein Bypassventil (55) ansteuert.

5. Druckluftaufbereitungseinrichtung (1) nach einem der Ansprüche 2 bis 4, **dadurch gekennzeichnet, dass** der Ausgang (40) des pneumatischen Und-Glieds (41) auch ein Bypassventil (55) ansteuert.

6. Druckluftaufbereitungseinrichtung (1) nach einem der Ansprüche 2 bis 5, **dadurch gekennzeichnet, dass**
a) das pneumatische Und-Glied (41) mit
aa) einem dem ersten Eingang (42) zugeordneten ersten Ventil (47) mit einem ersten Ventilsitz (50) und
ab) einem dem zweiten Eingang (43) zugeordneten zweiten Ventil (48) mit einem zweiten Ventilsitz (49)
ac) einem gemeinsamen, von den Drücken an beiden Eingängen (42, 43) beaufschlagten Ventilelement (51)
gebildet ist,
b) wobei das Ventilelement (51) ausschließlich dann, wenn beide Eingänge (42, 43) druckbeaufschlagt sind, eine Durchlassstellung einnimt, in welcher das Ventilelement (51) mit beiden Ventilsitzen (49; 50) jeweils einen Übertrittsquerschnitt bildet, welcher die Eingänge (42, 43) mit dem Ausgang (40) verbindet, während ansonsten der Ausgang (40) über mindestens einen Eingang (42, 43) entlüftet ist.

7. Druckluftaufbereitungseinrichtung (1) nach einem der Ansprüche 2 bis 5, **dadurch gekennzeichnet, dass** das pneumatische Und-Glied (41) mit einem Schaltventil gebildet ist, bei dem ein Eingang (42) ein steuernder Eingang ist und der andere Eingang (43) ein versorgender Eingang ist.

8. Druckluftaufbereitungseinrichtung (1) nach Anspruch 7, **dadurch gekennzeichnet, dass** das Schaltventil ein pneumatisch gesteuertes 2/2-Wegeventil (57) ist.

9. Druckluftaufbereitungseinrichtung (1) nach Anspruch 7, **dadurch gekennzeichnet, dass** das Schaltventil ein pneumatisch gesteuertes 3/2-Wegeventil (60) ist.

10. Druckluftaufbereitungseinrichtung (1) nach einem der Ansprüche 2 bis 9, **dadurch gekennzeichnet, dass** der Ausgang (40) des Und-Glieds (41) ein Ventil, insbesondere ein 3/2-Wegeventil (63), ansteuert, welches in einer ersten Schaltstellung den Kompressor (6) mit einem Lufttrockner (12) verbindet und in einer zweiten Schaltstellung die Verbindung zwischen Kompressor (6) und Lufttrockner (12) sperrt, aber eine Verbindung des Lufttrockners (12) mit einem Entlüftungsanschluss (7b) bereitstellt.

11. Druckluftaufbereitungseinrichtung (1) nach einem der Ansprüche 2 bis 10, **dadurch gekennzeichnet, dass** der Ausgang (40) des Und-Glieds (41)
a) ein zwischen Kompressor (6) und Lufttrockner (12) angeordnetes 2/2-Wegeventil (69) und
b) das Entlüftungsventil (36
ansteuert.

12. Druckluftaufbereitungseinrichtung (1) nach einem der Ansprüche 2 bis 11, **dadurch gekennzeichnet, dass** die Eingänge (42, 43) des Und-Glieds (41) von zwei von einer Steuereinheit (3) angesteuerten 3/2-Wege-Magnetventilen (25, 26) angesteuert werden.

13. Druckluftaufbereitungseinrichtung (1) nach einem der Ansprüche 2 bis 12, **dadurch gekennzeichnet, dass**
a) ein elektrisch angesteuertes Ventil (23)
aa) sowohl einen Eingang (43) des Und-Glieds (41)
ab) als auch einen Steuereingang (72) eines pneumatisch angesteuerten Steuerventils , insbesondere 3/2-Wegeventil (71), für eine Ansteuerung mindestens eines Kreisschutzventils (16a, 16b)
ansteuert und
b) das pneumatisch angesteuerte Steuerventil für mindestens ein Kreisschutzventil (16a, 16b) einen weiteren Steuereingang (73) besitzt, der von dem Druck in einer Leitung (13) stromabwärts des Lufttrockners (12) beaufschlagt ist,
c) wobei das pneumatisch angesteuerte Steuerventil mindestens ein Kreisschutzventil (16a, 16b) in eine Sperrstellung steuert, wenn beide Steuereingänge (72, 73) des Steuerventils für mindestens ein Kreisschutzventil (16a, 16b) druckbeaufschlagt sind.

14. Druckluftaufbereitungseinrichtung (1) nach einem der Ansprüche 2 bis 13, **dadurch gekennzeichnet, dass**
a) ein elektrisch angesteuertes Ventil (23)
aa) sowohl einen Eingang (43) des Und-Glieds (41)
ab) als auch einen Eingang (77) eines weiteren Und-Glieds (76)
ansteuert und
b) der andere Eingang (78) des weiteren Und-Glieds (76) mit einer Leitung (13) stromabwärts des Lufttrockners (12) verbunden ist und
c) der Ausgang (75) des weiteren Und-Glieds (76) mit mindestens einem Kreisschutzventil (16a; 16b) verbunden ist,
d) wobei das weitere Und-Glied (76) mindestens ein Kreisschutzventil (16a, 16b) in eine Sperrstellung steuert, wenn beide Eingänge (77, 78) des weiteren Und-Glieds (76) druckbeaufschlagt sind.

15. Druckluftaufbereitungseinrichtung (1) nach mindestens einem der Ansprüche 2 bis 14, **dadurch gekennzeichnet, dass**
a) ein elektrisch angesteuertes Ventil (23)
aa) sowohl einen Eingang (43) des Und-Glieds (41)
ab) als auch einen Eingang (81) eines pneumatisch in eine Durchlassstellung steuerbaren Überströmventils (79)
ansteuert,
b) ein Steuereingang (80) des Überströmventils (79) mit einer Leitung (13) stromabwärts des Lufttrockners (12) verbunden ist und
c) ein Ausgang des Überströmventils (79) mit mindestens einem Kreisschutzventil (16as, 16b)) verbunden ist,
d) wobei das Überströmventil (79) mindestens ein Kreisschutzventil (16a, 16b) in eine Durchlassstellung steuert, wenn beide Eingänge (80, 81) des Überströmventils druckbeaufschlagt sind.

## Claims

1. Compressed air processing device (1) for a utility vehicle with an electrically controlled valve (24) which both controls a compressor (6) as well as a deaerating valve (36) used for a regeneration and/or a pressure control, wherein the deaerating valve is controlled both by the electrically controlled valve (24) which controls the compressor (6) as well as by another electrically controlled valve (23), **characterized in that** the deaerating valve (36) comprises two control ports (83, 84) arranged on the same side wherein one control port (84) is connected to the electrically controlled valve (24) which controls the compressor (6) and one control port (83) is connected to the other electrically controlled valve (23).

2. Compressed air processing device (1) for a utility vehicle with an electrically controlled valve (24) which both controls a compressor (6) as well as a deaerating valve (36) used for a regeneration and/or a pressure control, wherein the deaerating valve is controlled both by the electrically controlled valve (24) which controls the compressor (6) as well as by another electrically controlled valve (23), **characterized in that** a pneumatic AND-element (41) is provided from which an input (42) is connected to the valve (24) and an output (40) controls the deaerating valve (36), the other input (43) of the pneumatic AND-element (41) being connected to the other electrically controlled valve (23).

3. Compressed air processing device (1) of one of the preceeding claims wherein the other valve (23) also controls at least one pneumatical control port (18) of a circuit protection valve (16a; 16b; 16c, 16d).

4. Compressed air processing device (1) of one of the preceeding claims wherein the other valve (23) also controls a bypass valve (55).

5. Compressed air processing device (1) of one of claims 2 to 4 wherein the output (40) of the pneumatic AND-element (41) also controls a bypass valve (55).

6. Compressed air processing device (1) of one of claims 3 to 7 wherein
a) the pneumatic AND-element (41) is built with
aa) a first valve (47) having a first valve seat (50) and being associated with the first input (42) and
ab) a second valve (48) associated with the second input (43) and having a second valve seat (49)
ac) a common valve element (51) biased by the pressures at the two inputs (42, 43),
b) wherein the valve element (51) is only in an open position if both inputs (42, 43) are biased by pressure, wherein in the passing position the valve element (51) builds with each of the two valve seats (49; 50) a transitional cross section which connects the inputs (42, 43) with the output (40) whereas in other positions the output (40) is deaerated via at least one input (42, 43).

7. Compressed air processing device (1) of one of claims 2 to 5 wherein the pneumatic AND-element (41) is formed by a switching valve wherein an input (42) of the switching valve is a controlling input and the other input (43) is a supplying input.

8. Compressed air processing device (1) of claim 7 wherein the switching valve is a pneumatically controlled 2/2-way valve (57).

9. Compressed air processing device (1) of claim 7 wherein the switching valve is a pneumatically controlled 3/2-way valve (60).

10. Compressed air processing device (1) of one of claims 2 to 9 wherein the output (40) of the AND-element (41) controls a valve, in particular a 3/2-way valve (63), wherein the valve in a first switching position connects the compressor (6) to an air dryer (12) and in a second switching position blocks the connection between the compressor (6) and the air dryer (12) but provides a connection of the air dryer (12) with a deaerating port (7b).

11. Compressed air processing device (1) of one of claims 3 to 10 wherein the output (40) of the AND-element (41) controls
a) a 2/2-way valve (69) located between the compressor (6) and the air dryer (12) and
b) the deaerating valve (36).

12. Compressed air processing device (1) of one of claims 2 to 11 wherein the inputs (42, 43) of the AND-element (41) are controlled by two 3/2-way solenoid valves (25, 26) which are controlled by a control unit (3).

13. Compressed air processing device (1) of one of claims 2 to 12 wherein
a) an electrically controlled valve (23) controls
aa) an input (43) of the AND-element (41)
ab) as well as a control port (72) of a pneumatically controlled control valve, in particular a 3/2-way valve (71), for controlling at least one circuit protection valve (16a, 16b)
and
b) the pneumatically controlled control valve comprises another control input (73) for at least one circuit protection valve (16a, 16b) wherein the control input (73) is biased by the pressure in a line (13) downstream from the air dryer (12),
c) wherein the pneumatically controlled control valve controls at least one circuit protection valve (16a, 16b) in a closed position if both control inputs (72, 73) of the control valve for at least one circuit protection valve (16a, 16b) are biased with pressure.

14. Compressed air processing device (1) of one of claims 2 to 13 wherein
a) an electrically controlled valve (23) controls
aa) an input (43) of the AND-element (41) and
ab) as well as an input (77) of another AND-element (76) and
b) the other input (78) of the other AND-element (76) is connected to a line (13) downstream from the air dryer (12) and
c) the output (75) of the other AND-element (76) is connected to at least one circuit protection valve (16a; 16b),
d) wherein the other AND-element (76) controls at least one circuit protection valve (16a, 16b) into a closed position if both inputs (77, 78) of the other AND-element (76) are biased with pressure.

15. Compressed air processing device (1) of at least one of claims 2 to 14 wherein
a) an electrically controlled valve (23) controls
aa) an input (43) of the AND-element (41) and
ab) as well as an input (81) of an overflow valve (79) which is pneumatically controllable into a passing position,
b) a control input (80) of the overflow valve (79) is connected to a line (13) downstream from the air dryer (12) and
c) an output of the overflow valve (79) is connected to at least one circuit protection valve (16as, 16b),
d) wherein the overflow valve (79) controls at least one circuit protection valve (16a, 16b) into a passing position if both inputs (80, 81) of the overflow valve are pressure biased.

## Revendications

1. Dispositif de fourniture d'air comprimé (1) pour un véhicule utilitaire, comportant une vanne (24) commandée par voie électrique, qui commande un compresseur (6), de même qu'une vanne de purge (36) utilisée pour une régénération et/ou un réglage de la pression, dans lequel la vanne de purge est commandée par la vanne (24) commandée par voie électrique, qui commande le compresseur (6), de même que par une vanne (23) supplémentaire commandée par voie électrique, **caractérisé en ce que** la vanne de purge (36) possède deux raccords de commande (83, 84) disposés sur le même côté, un raccord de commande (84) étant relié à la vanne (24) commandée par voie électrique qui commande le compresseur (6), et un raccord de commande (83) étant relié à la vanne (23) supplémentaire commandée par voie électrique.

2. Dispositif de fourniture d'air comprimé (1) pour un véhicule utilitaire avec une vanne (24) commandée par voie électrique, qui commande un compresseur (6), de même qu'une vanne de purge (36), dans lequel la vanne de purge est commandée aussi bien par la vanne (24) commandée par voie électrique, qui commande le compresseur (6), que par une vanne (23) supplémentaire commandée par voie électrique, **caractérisé en ce qu'**un circuit logique ET (41) pneumatique est disponible, dont une entrée (42) est reliée à la vanne (24) et dont la sortie (40) commande la vanne de purge (36), dans lequel l'autre entrée (43) du circuit logique ET (41) pneumatique est reliée à la vanne (23) supplémentaire commandée par voie électrique.

3. Dispositif de fourniture d'air comprimé (1) selon l'une quelconque des revendications précédentes, **caractérisé en ce que** la vanne (23) supplémentaire commande aussi au moins un raccord de commande (18) pneumatique d'une vanne de protection de circuit (16a ; 16b ; 16c, 16d).

4. Dispositif de fourniture d'air comprimé (1) selon l'une quelconque des revendications précédentes, **caractérisé en ce que** la vanne (23) supplémentaire commande également une vanne by-pass (55).

5. Dispositif de fourniture d'air comprimé (1) selon l'une quelconque des revendications 2 à 4, **caractérisé en ce que** la sortie (40) du circuit logique ET (41) pneumatique commande aussi une vanne by-pass (55).

6. Dispositif de fourniture d'air comprimé (1) selon l'une quelconque des revendications 2 à 5, **caractérisé en ce que**
a) le circuit logique ET (41) pneumatique est formé avec
aa) une première vanne (47), associée à la première entrée (42) et munie d'un premier siège de vanne (50), et
ab) une deuxième vanne (48) associée à la deuxième entrée (43) et munie d'un deuxième siège de vanne (49),
ac) un élément de vanne (51) commun sollicité par les pressions au niveau des deux entrées (42, 43),
b) ledit élément de vanne (51) étant, uniquement lorsque les deux entrées (42, 43) sont sollicitées en pression, dans la position de passage, dans laquelle l'élément de vanne (51) forme avec les deux sièges de vanne (49 ; 50) respectivement une section transversale de passage qui relie les entrées (42, 43) à la sortie (40), alors que dans un autre cas la sortie (40) est purgée via au moins une entrée (42, 43).

7. Dispositif de fourniture d'air comprimé (1) selon l'une quelconque des revendications 2 à 5, **caractérisé en ce que** le circuit logique ET (41) est formé avec une vanne de commande, dans laquelle une entrée (42) est une entrée de commande et l'autre entrée (43) est une entrée d'alimentation.

8. Dispositif de fourniture d'air comprimé (1) selon la revendication 7, **caractérisé en ce que** la vanne de commande est un distributeur 2/2 voies (57) commandé par voie pneumatique.

9. Dispositif de fourniture d'air comprimé (1) selon la revendication 7, **caractérisé en ce que** la vanne de commande est un distributeur 3/2 voies (60) commandé par voie pneumatique.

10. Dispositif de fourniture d'air comprimé (1) selon l'une quelconque des revendications 2 à 9, **caractérisé en ce que** la sortie (40) du circuit logique ET (41) commande une vanne, en particulier un distributeur 3/2 voies (63) qui, dans une première position de commande, relie le compresseur (6) à un dispositif de séchage à air (12) et, dans une deuxième position de commande, ferme la liaison entre le compresseur (6) et le dispositif de séchage à air (12), mais établit une liaison entre le dispositif de séchage à air (12) et un raccord de purge (7b).

11. Dispositif de fourniture d'air comprimé (1) selon l'une quelconque des revendications 2 à 10, **caractérisé en ce que** la sortie (40) du circuit logique ET (41) commande
a) un distributeur 2/2 voies (69) disposé entre le compresseur (6) et le dispositif de séchage à air (12), et
b) la vanne de purge (36).

12. Dispositif de fourniture d'air comprimé (1) selon l'une quelconque des revendications 2 à 11, **caractérisé en ce que** les entrées (42, 43) du circuit logique ET (41) sont commandées par deux distributeurs 3/2 voies magnétiques (25, 26) commandés par une unité de commande (3).

13. Dispositif de fourniture d'air comprimé (1) selon l'une quelconque des revendications 2 à 12, **caractérisé en ce que**
a) une vanne (23) commandée par voie électrique commande
aa) une entrée (43) du circuit logique ET (41),
ab) de même qu'une entrée de commande (72) d'une vanne de commande commandée par voie pneumatique, en particulier un distributeur 3/2 voies (71), pour la commande d'au moins une vanne de protection de circuit (16a, 16b), et
b) la vanne de commande commandée par voie pneumatique comporte, pour au moins une vanne de protection de circuit (16a, 16b), une entrée de commande (73) supplémentaire, qui est sollicitée par la pression dans une conduite (13) en aval du dispositif de séchage à air (12),
c) ladite vanne de commande commandée par voie pneumatique commandant au moins une vanne de protection de circuit (16a, 16b) dans une position de fermeture lorsque les deux entrées de commande (72, 73) de la vanne de commande sont sollicitées en pression pour au moins une vanne de protection de circuit (16a, 16b).

14. Dispositif de fourniture d'air comprimé (1) selon l'une quelconque des revendications 2 à 13, **caractérisé en ce que**
a) une vanne (23) commandée par voie électrique commande
aa) une entrée (43) du circuit logique ET (41),
ab) de même qu'une entrée (77) d'un circuit logique ET (76) supplémentaire, et
b) l'autre entrée (78) du circuit logique ET (76) supplémentaire est reliée à une conduite (13) en aval du dispositif de séchage à air (12), et
c) la sortie (75) du circuit logique ET (76) supplémentaire est reliée à au moins une vanne de protection de circuit (16a, 16b),
d) ledit circuit logique ET (76) supplémentaire commandant au moins une vanne de protection de circuit (16a, 16b) dans une position de fermeture lorsque les deux entrées (77, 78) du circuit logique ET (76) supplémentaire sont sollicitées en pression.

15. Dispositif de fourniture d'air comprimé (1) selon l'une quelconque des revendications 2 à 14, **caractérisé en ce que**
a) une vanne (23) commandée par voie électrique commande
aa) une entrée (43) du circuit logique ET (41),
ab) de même qu'une entrée (81) d'une vanne de décharge (79) pouvant être commandée pneumatiquement dans une position de passage,
b) une entrée de commande (80) de la vanne de décharge (79) est reliée à une conduite (13) en aval du dispositif de séchage à air (12), et
c) une sortie de la vanne de décharge (79) est reliée à au moins une vanne de protection de circuit (16a, 16b),
d) ladite vanne de décharge (79) commandant au moins une vanne de protection de circuit (16a, 16b) dans une position de passage lorsque les deux entrées (80, 81) de la vanne de décharge sont sollicitées en pression.
